(19) Europäisches Patentamt
European Patent Office
Office européen des brevets

(11) EP 4 481 484 A1

(12) EUROPEAN PATENT APPLICATION
published in accordance with Art. 153(4) EPC

(43) Date of publication:
**25.12.2024 Bulletin 2024/52**

(21) Application number: **23756401.8**

(22) Date of filing: **15.02.2023**

(51) International Patent Classification (IPC):
***G02F 1/1337*** $^{(2006.01)}$ ***C08G 73/10*** $^{(2006.01)}$

(52) Cooperative Patent Classification (CPC):
**C08G 73/10; G02F 1/1337**

(86) International application number:
**PCT/JP2023/005220**

(87) International publication number:
**WO 2023/157876 (24.08.2023 Gazette 2023/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.02.2022 JP 2022023238**

(71) Applicant: **Nissan Chemical Corporation**
**Tokyo 103-6119 (JP)**

(72) Inventors:
- **MORIYAMA Shoji**
  **Funabashi-shi, Chiba 274-0052 (JP)**
- **YADA Kenzo**
  **Funabashi-shi, Chiba 274-0052 (JP)**
- **KATAYAMA Masaaki**
  **Pyeongtaek-si, Gyeonggi-do 17998 (KR)**

(74) Representative: **Wächtershäuser & Hartz Patentanwaltspartnerschaft mbB**
**Weinstraße 8**
**80333 München (DE)**

# (54) LIQUID CRYSTAL ALIGNMENT AGENT, LIQUID CRYSTAL ALIGNMENT FILM, AND LIQUID CRYSTAL DISPLAY ELEMENT

(57) To provide a liquid crystal aligning agent for providing a liquid crystal alignment film, in which silver migration is suppressed when a material containing silver is used as an electrode or a wiring of a liquid crystal display device, and which has a high voltage holding ratio even after exposed to high temperature for a long time; a liquid crystal alignment film formed from the liquid crystal aligning agent; and a liquid crystal display device using the film.

A liquid crystal aligning agent comprising the following component (A) and a compound (B) represented by the following formula (1):
component (A): a polymer (A) selected from the group consisting of a polyimide precursor obtained by polymerizing a tetracarboxylic acid derivative component containing at least one compound selected from the group consisting of tetracarboxylic acid dianhydride and its derivative, and a diamine component, and a polyimide which is an imidized product of the polyimide precursor, the polymer (A) having a content of a carboxy group bonded to an aromatic ring of 5 parts by mass or less per 100 parts by mass of the polymer;

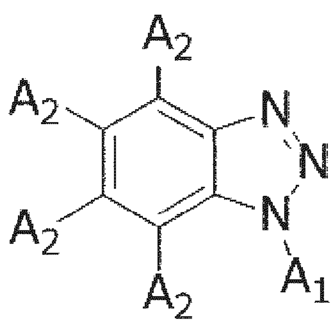

(1)

wherein $A_1$ is a monovalent group having a trialkoxysilyl group or a hydrogen atom, and $A_2$ are each independently a $C_{1-4}$ alkyl group, a carboxy group or a hydrogen atom.

EP 4 481 484 A1

## Description

TECHNICAL FIELD

The present invention relates to a liquid crystal aligning agent, a liquid crystal alignment film and liquid crystal display device.

BACKGROUND ART

Liquid crystal display devices with various drive systems differing in the electrode structure, physical properties of the liquid crystal molecules used, production process, etc., and for example, TN (twisted nematic), STN (super-twisted nematic), VA (vertical alignment), MVA (multi-domain vertical alignment), IPS (in-plane switching), FFS (fringe field switching) and PSA (polymer-sustained alignment) liquid crystal display devices have been known.

Such liquid crystal display devices are provided with a liquid crystal alignment film to align liquid crystal molecules. As the material of the liquid crystal alignment film, conventionally a coating film formed of a polymer such as a polyamic acid, a polyimide or a polysiloxane, which has favorable properties including heat resistance, mechanical strength and affinity with liquid crystal, has been used.

Along with an increase in definition of the liquid crystal display device, it has been required to prevent a decrease in contrast of the liquid crystal display device and to reduce after-images, it becomes important for the liquid crystal alignment film not only to achieve excellent liquid crystal alignment property and stable pretilt angle but also to have properties such as a high voltage holding ratio, suppressed after-images due to alternating current drive, low residual charge when direct current voltage is applied, and/or quick relaxation of residual charge accumulated by direct current voltage. Various proposals have been made for polyimide liquid crystal alignment films to meet the above requirements (Patent Documents 1 to 5).

On the other hand, various problems are known to arise if a specific metal material is used for an electrode and a wiring of the liquid crystal display device. For example, it has been known to use a liquid crystal alignment film having side chains containing a benzotriazole group introduced, when an electrode and a wiring containing copper or aluminum are used, to solve the problems (Patent Document 6). However, since it is necessary to introduce a characteristic structure to side chains of the polymer, the degree of freedom of design for the liquid crystal alignment film tends to be low, and other solutions have been desired.

It has also been known that similar problems are improved by adding a component containing a benzotriazole group to the liquid crystal (Patent Document 7). However, since additives are blended in the liquid crystal, the alignment properties of the liquid crystal may be impaired in some liquid crystals.

PRIOR ART DOCUMENTS

PATENT DOCUMENTS

| | |
|---|---|
| Patent Document 1: | JP-A-H9-316200 |
| Patent Document 2: | JP-A-H10-104633 |
| Patent Document 3: | JP-A-H8-76128 |
| Patent Document 4: | JP-A-H9-138414 |
| Patent Document 5: | JP-A-H11-38415 |
| Patent Document 6: | WO2016/194667 |
| Patent Document 7: | WO2016/194668 |

DISCLOSURE OF INVENTION

TECHNICAL PROBLEM

In a case where a material containing silver is used as an electrode and a wiring of the liquid crystal display device, a problem arises that silver migration occurs with a conventional liquid crystal aligning agent. By using aluminum or nickel as an alternative to silver, migration will reduce. However, the reflectance tends to decrease if aluminum or nickel is used for the electrode, and the electrical conductivity tends to decrease if it is used for the wiring, and there is room for

improvement.

Under these circumstances, it is an object of the present invention to provide a liquid crystal aligning agent for providing a liquid crystal alignment film, in which silver migration is suppressed and migration of an electrode or wiring containing silver is suppressed when a material containing silver is used as an electrode and a wiring of a liquid crystal display device, and which has a high voltage holding ratio even after exposed to high temperature for a long time; a liquid crystal alignment film formed of the liquid crystal aligning agent; and a liquid crystal display device using the film.

SOLUTION TO PROBLEM

The present inventors have conducted extensive studies to achieve the above object and as a result, found that a liquid crystal aligning agent containing a polymer having specific compounds as constituents is very effective to achieve the above object, and accomplished the present invention.

The present invention provides the following.

A liquid crystal aligning agent comprising the following component (A) and a compound (B) represented by the following formula (1):

component (A): a polymer (A) selected from the group consisting of a polyimide precursor obtained by polymerizing a tetracarboxylic acid derivative component containing at least one compound selected from the group consisting of tetracarboxylic acid dianhydride and its derivative, and a diamine component, and a polyimide which is an imidized product of the polyimide precursor, the polymer (A) having a content of a carboxy group bonded to an aromatic ring of 5 parts by mass or less per 100 parts by mass of the polymer;

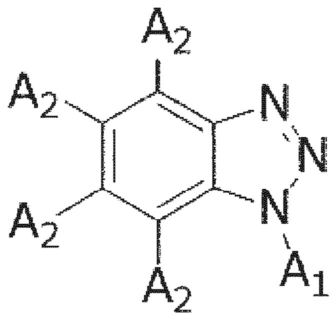

(1)

wherein $A_1$ is a monovalent group having a trialkoxysilyl group or a hydrogen atom, and $A_2$ are each independently a $C_{1-4}$ alkyl group, a carboxy group or a hydrogen atom.

ADVANTAGEOUS EFFECTS OF INVENTION

According to the present invention, it is possible to provide a liquid crystal aligning agent for providing a liquid crystal alignment film, in which silver migration is suppressed when a material containing silver is used as an electrode and a wiring of a liquid crystal display device, and which has a high voltage holding ratio even after exposed to high temperature for a long time; a liquid crystal alignment film formed of the liquid crystal aligning agent; and a liquid crystal display device using the film.

It has been known that by a benzotriazole derivative being coordinated on the surface of an electrode or wiring containing silver, a coating film is formed on the silver surface, whereby deterioration of the electrode and the wiring can be suppressed. However, according to the studies by the present inventors, depending upon the properties of a polymer to be in contact with the electrode or wiring containing silver, the coating film will be destroyed, and deterioration of the electrode or the wiring will proceed. Whereas according to the studies by the present inventors, it was found that both suppression of migration of the electrode or wiring containing silver and favorable properties as the liquid crystal alignment film can be achieved by using the polymer (A) having a carboxy group bonded to an aromatic ring in specific parts by mass or less, and the compound (B) in combination.

BRIEF DESCRIPTION OF DRAWINGS

Fig. 1 is a top view illustrating a silver pattern-equipped glass substrate.
Fig. 2 is a cross sectional view illustrating a silver pattern substrate having a cured film formed thereon.
Fig. 3 is an enlarged view illustrating the tip of a pattern after application of voltage (passed).
Fig. 4 is an enlarged view illustrating the tip of a pattern after application of voltage (failed).

DESCRIPTION OF EMBODIMENTS

Now, the liquid crystal aligning agent containing specific components, the liquid crystal alignment film formed by using the liquid crystal aligning agent, and the liquid crystal display device having the liquid crystal alignment film, will be described in detail below. However, it should be understood that the following description are merely examples of embodiments of the present invention, and the present invention is by no means restricted to such specific description.
In the following description, the "halogen atom" may, for example, be a fluorine atom, a chlorine atom, a bromine atom or an iodine atom. "Boc" is a tert-butoxycarbonyl group, and "*" is the binding position.

<Polymer (A)>

The liquid crystal aligning agent of the present invention contains the component (A). A polymer component means a component constituted by a polymer and may contain a single type of polymer or may contain two or more types of polymers. The polymer (A) may be used alone or in combination of two or more.
The polymer (A) contained in the component (A), is a polymer selected from the group consisting of a polyimide precursor, obtained by polymerizing a tetracarboxylic acid derivative component containing at least one compound selected from the group consisting of tetracarboxylic acid dianhydride and its derivative, and a diamine component, and a polyimide which is an imidized product of the polyimide precursor (hereinafter also referred to as polyimide polymer (A)).
The polyimide precursor as the polyimide polymer (A) is obtained by polymerizing a tetracarboxylic acid derivative component and a diamine component.
The tetracarboxylic acid derivative component contains at least one compound selected from the group consisting of tetracarboxylic acid dianhydride and its derivative (hereinafter they may sometimes generally be referred to as tetracarboxylic acid dianhydride compound).
The polyimide precursor may be a polyamic acid or a polyamic acid ester. The derivative of the tetracarboxylic acid dianhydride may be tetracarboxylic acid dihalide, tetracarboxylic acid dialkyl ester or tetracarboxylic acid dialkyl ester dihalide.

<<Polyimide polymer (A)>>

In a case where the polyimide polymer (A) is a polyamic acid, the polyimide polymer (A) is obtained, for example, by polymerizing (polycondensing) the tetracarboxylic acid derivative component containing the tetracarboxylic acid dianhydride and the diamine component. The polyimide as the polyimide polymer (A) is obtained by imidizing the polyamic acid. In a case where the polyimide polymer (A) is the polyamic acid ester, it is obtained by the method described hereinafter, and by imidizing the polyamic acid ester, the polyimide is obtained.

«<Tetracarboxylic acid dianhydride compound»>

The tetracarboxylic acid dianhydride compound may, for example, be an aromatic tetracarboxylic acid dianhydride, a non-cyclic aliphatic tetracarboxylic acid dianhydride or an alicyclic tetracarboxylic acid dianhydride, or a derivative thereof. Among them, the aromatic tetracarboxylic acid dianhydride is an acid dianhydride formed by intramolecular dehydration of four carboxy groups including at least one carboxy group bonded to an aromatic ring. The non-cyclic aliphatic tetracarboxylic acid dianhydride is an acid dianhydride formed by intramolecular dehydration of four carboxy groups bonded to the chain hydrocarbon structure, provided that it may not necessarily be constituted only by a chain hydrocarbon structure and may partly have an alicyclic structure or an aromatic structure.
The alicyclic tetracarboxylic acid dianhydride is an acid dianhydride formed by intramolecular dehydration of four carboxy groups including at least one carboxy group bonded to the alicyclic structure, provided that none of these four carboxy groups are bonded to an aromatic ring.
It is not necessarily constituted only by an alicyclic structure, and may partly have a chain hydrocarbon structure or an aromatic ring structure.
The aromatic tetracarboxylic acid dianhydride, non-cyclic aliphatic tetracarboxylic acid dianhydride and the alicyclic tetracarboxylic acid dianhydride are particularly preferably a tetracarboxylic acid dianhydride represented by the following formula (2).

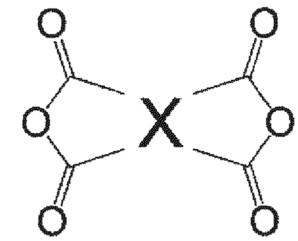

(2)

wherein X is a structure selected from the group consisting of the following formulae (x-1) to (x-17) and (xr-1) to (xr-2).

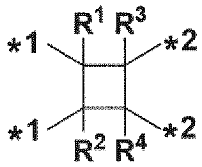

(x-1)

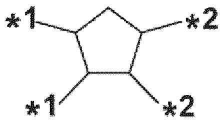

(x-2)

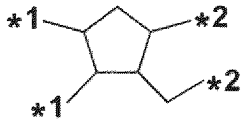

(x-3)

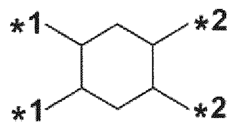

(x-4)

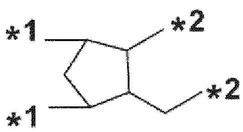

(x-5)

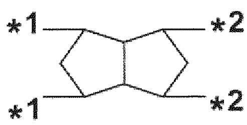

(x-6)

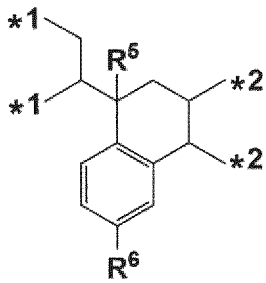

(x-7)

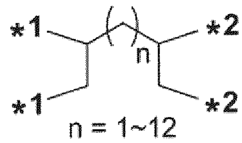

n = 1~12

(x-8)

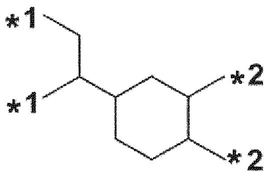

(x-9)

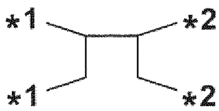

(x-10)

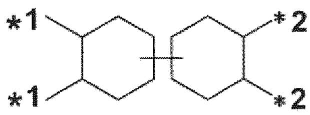

(x-11)

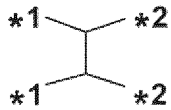

(x-12)

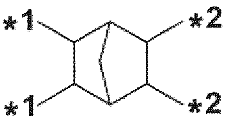

(x-13)

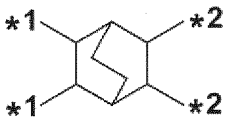

(x-14)

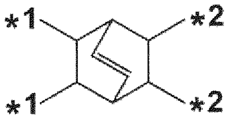

(x-15)

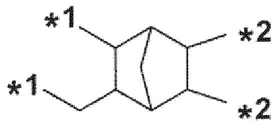

(x-16)

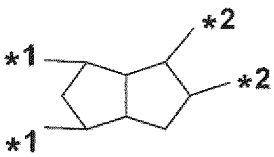

(x-17)

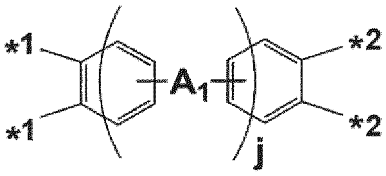
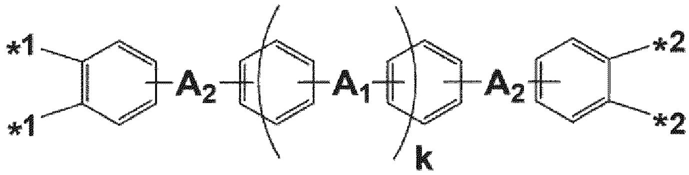

(xr-1) (xr-2)

wherein $R^1$ to $R^4$ are each independently a hydrogen atom, a halogen atom, a $C_{1-6}$ alkyl group, a $C_{2-6}$ alkenyl group, a $C_{2-6}$ alkynyl group, a $C_{1-6}$ monovalent organic group containing a fluorine atom, a $C_{1-6}$ alkoxy group, a $C_{2-6}$ alkoxyalkyl group, a $C_{2-6}$ alkyloxycarbonyl group or a phenyl group, $R^5$ and $R^6$ are each independently a hydrogen atom or a methyl group, j and k are an integer of 0 or 1, $A_1$ and $A_2$ are each independently a single bond, -O-, -CO-, -COO-, a phenylene group, a sulfonyl group or an amide group. A plurality of $A_2$ may be the same or different. *1 is a binding site bound to one acid anhydride group, and *2 is a binding site bound to the other acid anhydride group.

Preferred specific examples of the tetracarboxylic acid dianhydride represented by the above formula (2) include tetracarboxylic acid dianhydrides wherein X is selected from the above formulae (x-1) to (x-8) and (x-10) to (x-11).

The formula (x-1) is particularly preferably one selected from the group consisting of the following formulae (x1-1) to (x1-6).

X is preferably one selected from the group consisting of the following formulae (x1-1) to (x1-6) and the above formulae (x-5), (x-6) and (x-7):

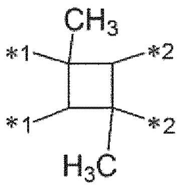
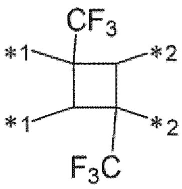
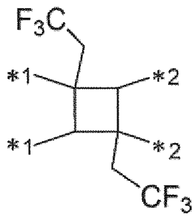
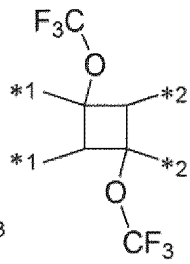
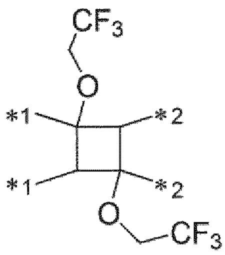
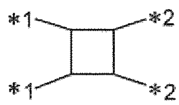

(x1-1) (x1-2) (x1-3) (x1-4) (x1-5) (x1-6)

wherein *1 is a binding site bound to one acid anhydride group, and *2 is a binding site bound to the other acid anhydride group.

Preferred specific examples of the above formulae (xr-1) and (xr-2) include the following formulae (xr-3) to (xr-18).

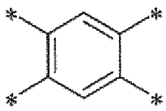
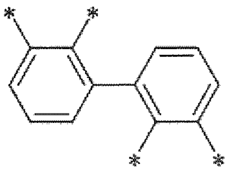
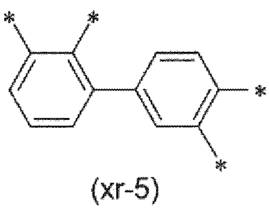
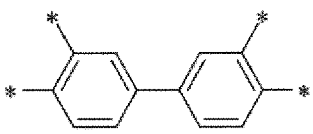

(xr-3) (xr-4) (xr-5) (xr-6)

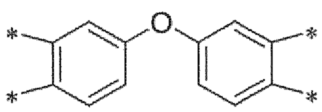
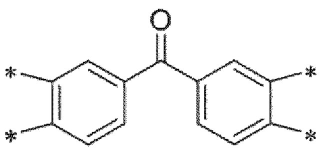
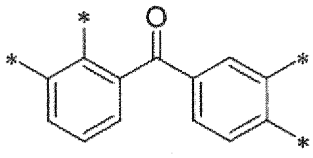

(xr-7) (xr-8) (xr-9)

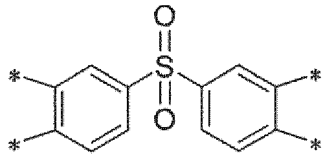

(xr-10)

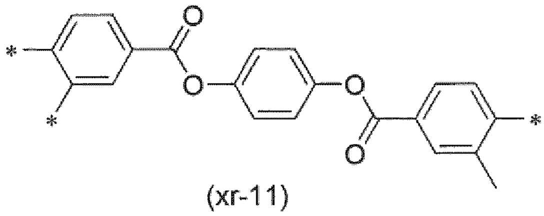

(xr-11)

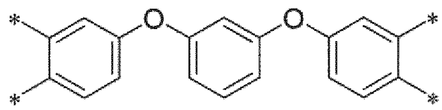

(xr-12)

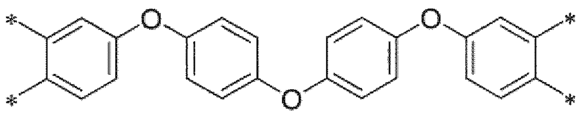

(xr-13)

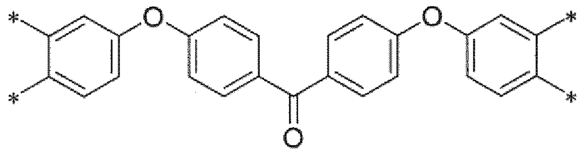

(xr-14)

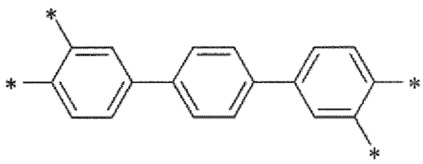

(xr-15)

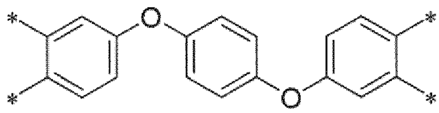

(xr-16)

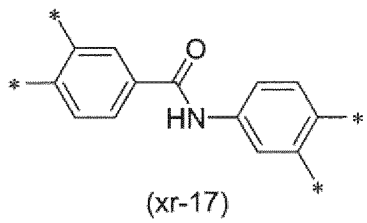

(xr-17)

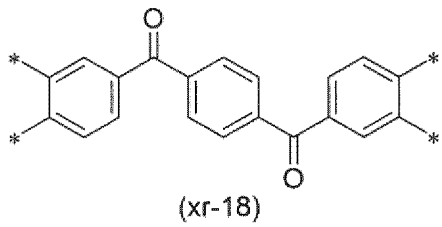

(xr-18)

In production of the polyimide polymer (A), the amount of the tetracarboxylic acid dianhydride represented by the above formula (2) or its derivative used is preferably 5 mol% or more, more preferably 10 mol% or more, further preferably 20 mol% or more, per mol of the entire tetracarboxylic acid derivative component to be reacted with the diamine component.

<<<Diamine component>>>

The diamine component to be used for production of the polyimide precursor is not particularly limited. Examples of the diamine are mentioned below, however, the present invention is by no means restricted thereto. The diamines may be used alone or in combination of two or more.

p-Phenylenediamine, 2,3,5,6-tetramethyl-p-phenylenediamine, 2,5-dimethyl-p-phenylenediamine, m-phenylenediamine, 2,4-dimethyl-m-phenylenediamine, 1,4-diamino-2,5-dimethoxybenzene, 2,5-diaminotoluene, 2,6-diaminotoluene, 4-aminobenzylamine, 2-(4-aminophenyl)ethylamine, 4-(2-(methylamino)ethyl)aniline, 4-(2-aminoethyl)aniline, 2-(6-amino-2-naphthyl)ethylamine, 2,2'-dimethyl-4,4'-diaminobiphenyl, 3,3'-dimethyl-4,4'-diaminobiphenyl, 3,3'-dimethoxy-4,4'-diaminobiphenyl, 3,3'-dihydroxy-4,4'-diaminobiphenyl, 3-trifluoromethyl-4,4'-diaminobiphenyl, 2-trifluoromethyl-4,4'-diaminobiphenyl, 3-fluoro-4,4'-diaminobiphenyl, 2-fluoro-4,4'-diaminobiphenyl, 2,2'-difluoro-4,4'-diaminobiphenyl, 3,3'-difluoro-4,4'-diaminobiphenyl, 2,2'-bis(trifluoromethyl)-4,4'-diaminobiphenyl, 3,3'-bis(trifluoromethyl)-4,4'-diaminobiphenyl, 3,4'-diaminobiphenyl, 4,4'-diaminobiphenyl, 3,3'-diaminobiphenyl, 2,2'-diaminobiphenyl, 2,3'-diaminobiphenyl, 1,5-diaminonaphthalene, 1,6-diaminonaphthalene, 1,7-diaminonaphthalene, 2,5-diaminonaphthalene, 2,6-diaminonaphthalene, 2,7-diaminonaphthalene, bis(4-aminophenoxy)methane, 1,2-bis(4-aminophenyl)ethane, 1,2-bis(4-aminophenoxy)ethane, 1,3-bis(3-aminophenyl)propane, 1,4-bis(4-aminophenyl)butane, 1,4-bis(4-amino-2-methylphenyloxy)butane, 1,4-bis(3-aminophenyl)butane, bis(3,5-diethyl-4-aminophenyl)methane, 1,5-bis(4-aminophenoxy)pentane, 1,5-bis(3-aminophenoxy)pentane, 1,6-bis(4-aminophenoxy)hexane, 1,6-bis(3-aminophenoxy)hexane, 1,7-bis(4-aminophenoxy)heptane, 1,7-bis(3-aminophenoxy)heptane, 1,8-bis(4-aminophenoxy)octane, 1,8-bis(3-aminophenoxy)octane, 1,9-bis(4-aminophenoxy)nonane, 1,9-bis(3-aminophenoxy)nonane, 1,10-bis(4-am inophenoxy)decane, 1,10-bis(3-aminophenoxy)decane, 1,11-bis(4-aminophenoxy)undecane, 1,11-bis(3-aminophenoxy)undecane, 1,12-bis(4-aminophenoxy)dodecane, 1,12-bis(3-aminophenoxy)dodecane, 3-[2-[2-(4-aminophenoxy)ethoxy]ethoxy] benzenamine, 1,2-bis(6-amino-2-naphthyloxy)ethane, 1,2-bis(6-amino-2-naphthyl)ethane, 6-[2-(4-aminophenoxy) ethoxy]-2-naphthylamine, 4'-[2-(4-aminophenoxy)ethoxy]-[1,1'-biphenyl]-4-amine, 1,4-bis[2-(4-aminophenyl)ethyl]butanedioate, 1,6-bis[2-(4-aminophenyl)ethyl]hexanedioate, 2,2-bis(4-aminophenyl)hexafluoropropane, 2,2-bis(3-aminophenyl)hexafluoropropane, 2,2-bis(3-amino-4-methylphenyl)hexafluoropropane, 2,2-bis(4-aminophenyl)propane, 2,2-bis(3-aminophenyl)propane, 2,2-bis(3-amino-4-methylphenyl)propane, 3,3'-diaminodiphenylmethane, 3,4'-diaminodiphenylmethane, 4,4'-diaminodiphenylmethane; diamines having a tetracarboxylic acid diimide structure, such as N,N'-bis(4-aminophenyl)-cyclobutane-(1,2,3,4)-tetracarboxylic acid diimide, N,N'-bis(4-aminophenyl)-1,3-dimethylcyclobutane-(1,2,3,4)-tetracarboxylic acid diimide, and N,N'-bis(2,2'-bis(trifluoromethyl)-4'-amino-1,1'-biphenyl-4-yl)-cyclobutane-(1,2,3,4)-tetracarboxylic acid diimide;

1,4-phenylenebis(4-aminobenzoate), 1,4-phenylenebis(3-aminobenzoate), 1,3-phenylenebis(4-aminobenzoate), 1,3-phenylenebis(3-aminobenzoate), bis(4-aminophenyl)terephthalate, bis(3-aminophenyl)terephthalate, bis(4-aminophenyl)isophthalate, bis(3-aminophenyl)isophthalate; diamines having a photoaligning group, such as 4,4'-diaminoazobenzene, diaminotolane, 4,4'-diaminochalcone and aromatic diamines having a cinnamate structure, represented by [4-[(E)-3-[2-(2,4-diaminophenyl)ethoxy]-3-oxo-prop-1-enyl]phenyl]4-(4,4,4-trifluorobutoxy)benzoate and [4-[(E)-3-[[5-amino-2-[4-amino-2-[[(E)-3-[4-[4-(4,4,4-trifluorobutoxy)benzoyl]oxyphenyl] prop-2-enoyl]oxymethyl]phenyl]phenyl]methoxy]-3-oxo-prop-1-enyl]phenyl]4-(4,4,4-trifluorobutoxy)benzoate; diamines having a photopolymerizable group at their terminal, such as 2-(2,4-diaminophenoxy)ethyl methacrylate and 2,4-diamino-N,N-diallylaniline; diamines having a radical polymerization initiator function such as 1-(4-(2-(2,4-diaminophenoxy)ethoxy)phenyl)-2-hydroxy-2-methylpropanone and 2-(4-(2-hydroxy-2-methylpropanoyl)phenoxy)ethyl 3,5-diaminobenzoate; diamines having an amide bond such as 4,4'-diaminobenzanilide; diamines having a urea bond such as 1,3-bis(4-aminophenyl)urea; and diamines having a thermally leaving group, such as $H_2$ N-$Y_D$-$NH_2$ (wherein $Y_D$ is a bivalent organic group having in its molecule -N(D)- (wherein D is a protective group which is to leave by heating and to be replaced with a hydrogen atom));

3,3'-diaminodipheny ether, 3,4'-diaminodipheny ether, 4,4'-diaminodipheny ether, 1,4-bis(4-aminophenoxy) benzene, 1,3-bis(4-aminophenoxy)benzene, 2,2-bis[4-(4-aminophenoxy)phenyl]propane, 2,2-bis[4-(4-aminophenoxy) phenyl]hexafluoropropane, 4,4'-sulfonyldianiline, 3,3'-sulfonyldianiline, bis(4-aminophenyl)silane, bis(3-aminophenyl) silane, dimethyl-bis(4-aminophenyl)silane, dimethyl-bis(3-aminophenyl)silane, 4,4'-thiodianiline, 3,3'-thiodianiline, 1,4-bis(4-aminophenyl)benzene, 1,3-bis(4-aminophenyl)benzene, 4,4'-diaminobenzophenone, 1,4-bis(4-aminophenyl)benzene, 1,3-bis(4-aminophenyl)benzene, 1,4-bis(4-aminobenzyl)benzene; heterocyclic ring-containing diamines such as 2,6-diaminopyridine, 3,4-diaminopyridine, 2,4-diaminopyrimidine, 3,6-diaminocarbazole, N-methyl-3,6-diaminocarbazole, 1,4-bis-(4-aminophenyl)-piperazine, 3,6-diaminoacridine, N-ethyl-3,6-diaminocarbazole, N-phenyl-3,6-diaminocarbazole, N-[3-(1H-imidazol-1-yl)propyl]3,5-diaminobenzamide, 4-[4-[(4-aminophenoxy)methyl]-4,5-dihydro-4-methyl-2-oxazolyl]-benzenamine, 4-[4-[(4-aminophenoxy)methyl]-4,5-dihydro-2-oxazolyl]-benzenamine, 1,4-bis(p-aminobenzyl)piperazine, 4,4'-propane-1,3-diylbis(piperidin-1,4-diyl)dianiline, 4-(4-aminophenoxycarbonyl)-1-(4-aminophenyl)piperidine, 2,5-bis(4-aminophenyl)pyrrole, 4,4'-(1-methyl-1H-pyrrol-2,5-diyl)bis[benzenamine], 1,4-bis-(4-aminophenyl)-piperazine, 2-N-(4-aminophenyl)pyridine-2,5-diamine, 2-N-(5-aminopyridin-2-yl)pyridine-2,5-diamine, 2-(4-aminophenyl)-5-aminobenzimidazole, 2-(4-aminophenyl)-6-aminobenzimidazole, 5- (1H-benzimidazol-2-yl)benzene-1,3-diamine, and diamines represented by the following formulae (z-1) to (z-5); and diamines having at least one nitrogen atom-containing structure (extruding an amino group derived from -N(D)- (wherein D is a protective group which is to leave by heating and to be replaced with a hydrogen atom)) selected from the group consisting of a heterocyclic ring containing a nitrogen atom, a secondary amino group and a tertiary amino group, represented by diamines having a diphenylamine structure, such as 4'-diaminodiphenylamine, 4,4'-diaminodiphenyl-N-methylamine, N,N'-bis(4-aminophenyl)-benzidine, N,N'-bis(4-aminophenyl)-N,N'-dimethylbenzidine and N,N'-bis(4-aminophenyl)-N,N'-dimethyl-1,4-benzenediamine;

2,4-diaminophenol, 3,5-diaminophenol, 3,5-diaminobenzylalcohol, 2,4-diaminobenzylalcohol, 4,6-diaminoresorcinol, 4,4'-diamino-3,3'-dihydroxybiphenyl; diamines having a carboxy group, such as 2,4-diaminobenzoic acid, 2,5-diaminobenzoic acid, 3,5-diaminobenzoic acid, 4,4'-diaminobiphenyl-3-carboxylic acid, 4,4'-diaminodiphenylmethane-3-carboxylic acid, 1,2-bis(4-aminophenyl)ethane-3-carboxylic acid, 4,4'-diaminobiphenyl-3,3'-dicarboxylic acid, 4,4'-diaminobiphenyl-2,2'-dicarboxylic acid, 3,3'-diaminobiphenyl-4,4'-dicarboxylic acid, 3,3'-diaminobiphenyl-2,4'-dicarboxylic acid, 4,4'-diaminodiphenylmethane-3,3'-dicarboxylic acid, 1,2-bis(4-aminophenyl)ethane-3,3'-dicarboxylic acid, and 4,4'-diaminodipheny ether-3,3'-dicarboxylic acid; 1-(4-aminophenyl)-1,3,3-trimethyl-1H-indan-5-amine, 1-(4-aminophenyl)-2,3-dihydro-1,3,3-trimethyl-1H-inden-6-amine; diamines having a steroid skeleton, such as cholestanyloxy-3,5-diaminobenzene, cholestenyloxy-3,5-diaminobenzene, cholestanyloxy-2,4-diaminobenzene, cholestanyl 3,5-diaminobenzoate, cholestenyl 3,5-diaminobenzoate, lanostanyl 3,5-diaminobenzoate and 3,6-bis(4-aminobenzoyloxy)cholestane; diamines represented by the following formulae (V-1) and (V-2); diamines having a siloxane bond such as 1,3-bis(3-aminopropyl)-tetramethyldisiloxane; non-cyclic aliphatic diamines such as m-xylylenediamine, 1,3-propanediamine, tetramethylenediamine, pentamethylenediamine and hexamethylenediamine; alicyclic diamines such as 1,3-bis(aminomethyl)cyclohexane, 1,4-diaminocyclohexane and 4,4'-methylenebis(cyclohexylamine); and diamines having two amino groups bonded to a group represented by any one of the formulae (Y-1) to (Y-167) as described in WO2018/117239.

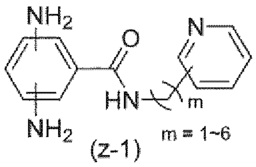
(z-1)

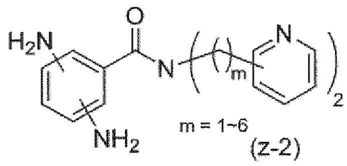
(z-2)

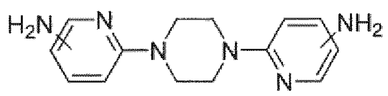
(z-3)

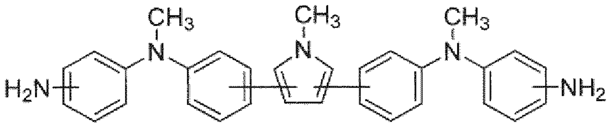
(z-4)

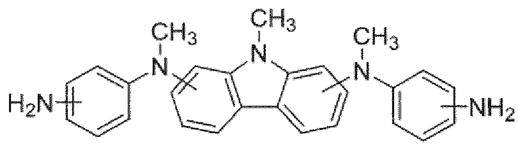
(z-5)

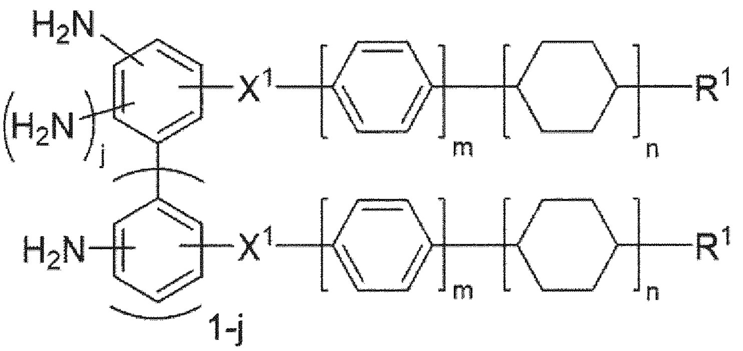
(V-1)

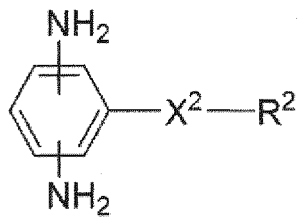
(V-2)

In the formula (V-1), m and n are each an integer of 0 to 3 (provided that $1 \leq m+n \leq 4$ is satisfied), j is an integer of 0 or 1, $X^1$ is $-(CH_2)_a-$ (wherein a is an integer of 1 to 15), -CONH-, -NHCO-, $-CO-N(CH_3)-$, -NH-, -O-, $-CH_2O-$, $-CH_2-OCO-$, -COO- or -OCO-, $R^1$ is a fluorine atom, a $C_{1-10}$ fluorine atom-containing alkyl group, a $C_{1-10}$ fluorine atom-containing alkoxy group, a $C_{3-10}$ alkyl group, a $C_{3-10}$ alkoxy group or a $C_{3-10}$ alkoxyalkyl group. In the formula (V-2), $X^2$ is -O-, $-CH_2O-$, $-CH_2-OCO-$, -COO- or -OCO-, and $R^2$ is a $C_{3-30}$ alkyl group or a $C_{3-20}$ fluorine atom-containing alkyl group. In a case where there are two m, n, $X^1$ and $R^1$, they are each independently as defined above.

In the above -N(D)- which the diamine has, D is preferably a carbamate protective group represented by e.g. a benzyloxycarbonyl group, a 9-fluorenylmethyloxycarbonyl group, an allyloxycarbonyl group, or Boc. Boc is particularly preferred in that it efficiently leaves by heat and leaves at a relatively low temperature, and it is discharged as a harmless gas when it leaves.

Preferred examples of the diamine having a thermally leaving group exemplified as the above diamines, include diamines selected from the following formulae (d-1) to (d-7).

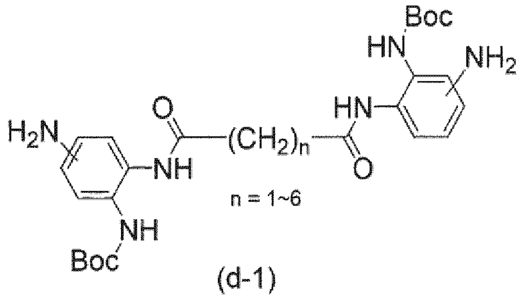

n = 1~6

(d-1)

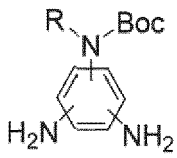

(d-2)

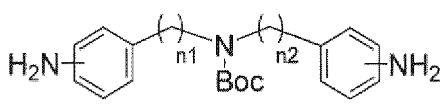

n1 = 1~6, n2 = 1~6

(d-3)

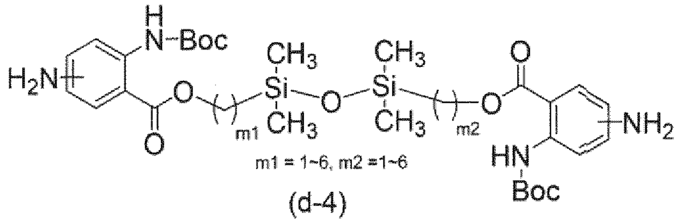

m1 = 1~6, m2 =1~6

(d-4)

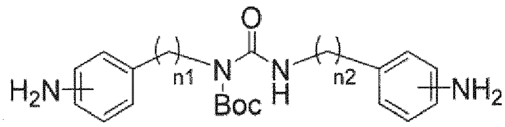

n1 = 1~6, n2 = 1~6

(d-5)

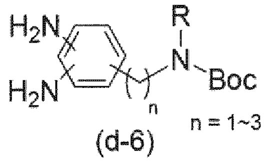

n = 1~3

(d-6)

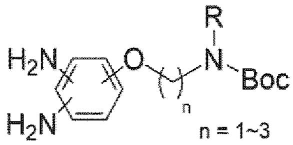

n = 1~3

(d-7)

In the formulae (d-2), (d-6) and (d-7), R is a hydrogen atom or Boc.

In a case where the diamine having a thermally leaving group is used as the diamine component used for production of the polyimide precursor, with a view to suitably obtaining the effects of the present invention, preferably its amount per mol of the diamine component is preferably 5 to 40 mol%, more preferably 5 to 35 mol%, further preferably 5 to 30 mol%.

The polymer (A) may contain at least one polymer selected from the group consisting of a polyimide precursor obtained by using a diamine component containing the above diamine having a nitrogen atom-containing structure, and an imidized product of the polyimide precursor (hereinafter also referred to as polyimide polymer (Q)), with a view to reducing after-images due to residual DC and to improving electrical properties.

The tetracarboxylic acid derivative component to obtain the polyimide polymer (Q) may, for example, be a tetracarboxylic acid derivative component containing the above tetracarboxylic acid dianhydride compound. The tetracarboxylic acid dianhydride compound to obtain the polyimide polymer (Q) is particularly preferably the tetracarboxylic acid dianhydride represented by the above formula (2) or its derivative. The amount of the tetracarboxylic acid dianhydride represented by the above formula (2) or its derivative used is, per mol of the entire tetracarboxylic acid derivative component to be reacted with the diamine component, preferably 10 mol% or more, more preferably 20 mol% or more.

The amount of the diamine containing a nitrogen atom-containing structure used as the diamine component to obtain the polyimide polymer (Q) is, to the entire amount of the diamine component to obtain the polymer (Q), preferably 5 to 100 mol%, more preferably 10 to 95 mol%, further preferably 20 to 80 mol%.

As the diamine component to obtain the polyimide polymer (Q), a diamine other than the diamine containing a nitrogen atom-containing structure may further be contained. Preferred specific examples include a diamine having in its molecule at least one type of group selected from the group consisting of a urea bond, an amide bond, a carboxy group and a hydroxy group (hereinafter also referred to as diamine (c)). The amount of the diamine (c) used is, to the entire amount of the diamine component to obtain the polymer (Q), preferably 1 to 95 mol%, more preferably 5 to 90 mol%, further preferably 20 to 80 mol%.

In the polymer (A) of the present invention, the content of the carboxy group bonded to the aromatic ring is 5 parts by mass or less per 100 parts by mass of the polymer.

The carboxy group bonded to the aromatic ring may be one derived from the tetracarboxylic acid dianhydride or its derivative contained in the tetracarboxylic acid derivative component, or may be one derived from the diamine contained in the diamine component.

The amount of the carboxy group bonded to the aromatic ring is, per 100 parts by mass of the polymer, preferably 3 parts by mass or less, more preferably 1 parts by mass or less.

The polymer (A) of the present invention is a polymer having a content of the carboxy group bonded to the

aromatic ring of 5 parts by mass or less per 100 parts by mass of the polymer, and in selection of the tetracarboxylic acid dianhydride and the diamine, it is necessary that the polymer satisfying such conditions is to be obtained. Also in a case where the polyimide polymer (Q) is contained, the polymer (Q) is required to have a content of the carboxy group bonded to the aromatic ring of 5 parts by mass or less per 100 parts by mass of the polymer.

The component (A) contained in the liquid crystal aligning agent of the present invention may be a mixture of the polyimide polymer (Q) with at least one polymer selected from the group consisting of a polyimide precursor obtained by using a diamine component containing no diamine having a nitrogen atom-containing structure, and an imidized product of the polyimide precursor (hereinafter also referred to as polyimide polymer (H)). The content ratio of the polyimide polymer (Q) to the polyimide polymer (H) is, by mass ratio of [polyimide polymer (Q)]/[polyimide polymer (H)] preferably 10/90 to 90/10, more preferably 20/80 to 80/20, further preferably 30/70 to 70/30.

The component (A) contained in the liquid crystal aligning agent of the present invention may further contain a polymer other than the polymer (A). Specific examples of such other polymer include polymers selected from the group consisting of polysiloxane, polyester, polyamide, polyurea, polyorganosiloxane, a cellulose derivative, polyacetal, a polystyrene derivative, a poly(styrene/maleic acid anhydride) copolymer, a poly(isobutylene/maleic acid anhydride) copolymer, a poly(vinyl ether/maleic acid anhydride) copolymer, a poly(styrene/phenylmaleimide) derivative and a poly(meth)acrylate. Specific examples of the poly(styrene/maleic acid anhydride) copolymer include SMA1000, SMA2000, SMA3000 (manufactured by Cray Valley) and GSM301 (manufactured by Gifu Shellac Manufacturing Co., Ltd.), specific examples of the poly(isobutylene/maleic acid anhydride) copolymer include ISOBAM-600 (manufactured by Kuraray Co., Ltd.), and specific examples of the poly(vinyl ether/maleic acid anhydride) copolymer include Gantrez AN-139 (methyl vinyl ether maleic acid anhydride resin, manufactured by Ashland).

Such other polymers may be used alone or in combination of two or more. The content of such other polymers is, per 100 parts by mass of the component (A) contained in the liquid crystal aligning agent, preferably 0.1 to 90 parts by mass, more preferably 1 to 90 parts by mass.

<Polyimide precursor production method>

The polyamic acid as one of the polyimide precursor may be produced by the following method. Specifically, the tetracarboxylic acid derivative component containing the tetracarboxylic acid dianhydride and the diamine component are reacted (polycondensed) in the presence of an organic solvent preferably at -20 to 150°C, more preferably at 0 to 50°C preferably for 30 minutes to 24 hours, more preferably for 1 to 12 hours.

Specific examples of the organic solvent used for the above reaction include N-methyl-2-pyrrolidone, N-ethyl-2-pyrrolidone, γ-butyrolactone, N,N-dimethylformamide, N,N-dimethylacetamide, dimethylsulfoxide and 1,3-dimethyl-2-imidazolidinone. In a case where the polymer is highly soluble in a solvent, it is possible to use methyl ethyl ketone, cyclohexanone, cyclopentanone, 4-hydroxy-4-methyl-2-pentanone, propylene glycol monomethyl ether, ethylene glycol monomethyl ether, ethylene glycol monoethyl ether, ethylene glycol monopropyl ether, diethylene glycol monomethyl ether or diethylene glycol monoethyl ether. They may be used as a mixture of two or more.

The reaction may be carried out at an optional concentration, and preferably at 1 to 50 mass%, more preferably 5 to 30 mass%. The reaction may be carried out initially at high concentration, and then with the addition of the solvent. In the reaction, the ratio of the total number of moles of the diamine component to the total number of moles of the tetracarboxylic acid derivative component is preferably 0.8 to 1.2. In the same manner as conventional polycondensation reaction, the closer to 1.0 the molar ratio is, the higher the molecular weight of the polyamic acid to be produced.

The polyamic acid obtained by the above reaction can be collected by pouring the reaction solution with through stirring to a poor solvent to precipitate the polyamic acid. Otherwise, precipitation may be conducted several times, the precipitate is washed with a poor solvent and dried at room temperature or with heating to obtain a purified polyamic acid powder. The poor solvent is not particularly limited and may, for example, be water, methanol, ethanol, hexane, butylcellosolve, acetone or toluene.

The polyamic acid ester as one of the polyimide precursor may be produced by a known method such as (1) a method of esterifying the polyamic acid, (2) a method of reacting the tetracarboxylic acid derivative component including tetracarboxylic acid diester dichloride with the diamine component, or (3) a method of polycondensing the tetracarboxylic acid derivative component including tetracarboxylic acid diester and the diamine.

The polyamic acid and the polyamic acid ester may be a terminal-modified polymer obtained by using a proper end-capping agent together with the above tetracarboxylic acid derivative component and diamine component, in its production.

The end-capping agent may, for example, be an acid monohydride such as acetic anhydride, maleic anhydride, Nadic anhydride, phthalic anhydride, itaconic anhydride, 1,2-cyclohexanedicarboxylic anhydride, 3-hydroxyphthalic anhydride, trimellitic anhydride, 3-(3-trimethoxysilyl)propyl)-3,4-dihydrofuran-2,5-dione, 4,5,6,7-tetrafluoroisobenzofuran-1,3-dione or 4-ethynylphthalic acid anhydride; a diester dicarbonate compound such as di-tert-butyl dicarbonate or diallyl dicarbonate; a chlorocarbonyl compound such as acryloyl chloride, methacryloyl chloride or nicotinic acid chloride; a

monoamine compound such as aniline, 2-aminophenol, 3-aminophenol, 4-aminosalicylic acid, 5-aminosalicylic acid, 6-aminosalicylic acid, 2-aminobenzoic acid, 3-aminobenzoic acid, 4-aminobenzoic acid, cyclohexylamine, n-butylamine, n-pentylamine, n-hexylamine, n-heptylamine or n-octylamine; a monoisocyanate compound such as ethyl isocyanate, phenyl isocyanate, naphthyl isocyanate, or an isocyanate having an unsaturated bond, such as 2-acryloyloxyethyl isocyanate or 2-methacryloyloxyethyl isocyanate; or an isothiocyanate compound such as ethyl isothiocyanate or allyl isothiocyanate.

The proportion of the end-capping agent used is, per 100 parts by mole of the entire diamine component used, preferably 40 parts by mole or less, more preferably 30 parts by mole or less.

<Method for producing polyimide>

The polyimide used in the present invention may be produced by imidizing the above polyimide precursor by a known method.

In the polyimide, the ring closure ratio (also called imidization degree) of the functional group which the polyamic acid or the polyamic acid ester has is not necessarily 100%, and may optionally be adjusted depending upon the application and the purpose.

As a method of imidizing the polyamic acid or the polyamic acid ester to obtain the polyimide, thermal imidization of heating a solution of the polyamic acid or the polyamic acid ester as it is, or catalytic imidization of adding a catalyst (e.g. a basic catalyst such as pyridine, or an acid anhydride such as acetic anhydride) to a solution of the polyamic acid or the polyamic acid ester, may be mentioned.

<Solution viscosity/molecular weight of polymer >

The polyamic acid, the polyamic acid ester and the polyimide to be used in the present invention are preferably one having a solution viscosity of for example 10 to 1000 mPa·s in a solution at a concentration of 10 to 15 mass%, from the viewpoint of workability, however, they are not particularly limited. The solution viscosity (mPa·s) of the polymer is a value measured by an E type rotational viscometer at 25°C with respect to a polymer solution at a concentration of 10 to 15 mass% in a good solvent

(for example, γ-butyrolactone or N-methyl-2-pyrolidone)

The weight average molecular weight (Mw) of the polyamic acid, the polyamic acid ester and the polyimide as calculated as polystyrene measured by gel permeation chromatography (GPC) is preferably 1,000 to 500,000, more preferably 2,000 to 500,000. The molecular weight distribution represented by the ratio of Mw to the number average molecular weight (Mn) as calculated as polystyrene measured by GPC, that is Mw/Mn, is preferably 15 or less, more preferably 10 or less. Within such a molecular weight range, favorable liquid crystal alignment property of the liquid crystal display device can be secured.

<<<Compound (B)>>>

The liquid crystal aligning agent of the present invention contains the compound (B) represented by the formula (1). The compound (B) may be used alone or in combination of two or more.

In the compound (B), at least one $A_2$ may be a methyl group, an ethyl group, a propyl group, an isopropyl group, a butyl group or a carboxy group.

In the compound (B), $A_1$ may have a carboxy group. $A_1$ may be a monovalent group represented by "A-X-*" (wherein A is a trialkoxysilyl group, X is $-(CH_2)_n-$ (wherein n is an integer of 1 to 18), or a group having at least one $-CH_2-$ of $-(CH_2)_n-$ replaced with -CONH-, -NHCO-, $-CO-N(CH_3)-$, -NH-, -O-, -COO- or -OCO-, and optional hydrogen atom which X has may be replaced with a halogen atom, a carboxy group, a hydroxy group, a cyano group or a nitro group).

The compound represented by the formula (1) is preferably a benzotriazole derivative substituted with a $C_{1-4}$ alkyl group, such as benzotriazole, 4-methyl benzotriazole or 5-methyl benzotriazole, or a benzotriazole derivative having a monovalent group having a trialkoxysilyl group, such as N-(trimethoxysilyl-propyl)-1H-benzotriazole-1-carbodiamide. Among them, compounds represented by the following formulae (b-1) to (b-4) are more preferred.

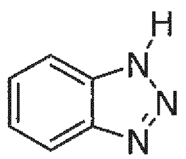

(b-1)

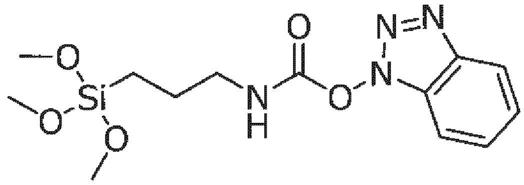

(b-2)

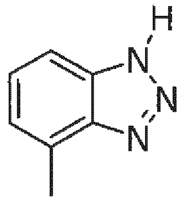

(b-3)

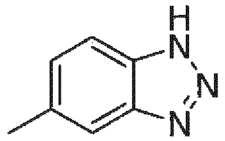

(b-4)

The content of the compound (B) contained in the liquid crystal aligning agent of the present invention is, per 100 parts by mass of the component (A), preferably 0.1 to 30 parts by mass, more preferably 0.1 to 20 parts by mass, further preferably 1 to 10 parts by mass.

<Liquid crystal aligning agent>

The liquid crystal aligning agent is used to prepare a liquid crystal alignment film, and for forming a uniform thin film, it is in the form of a coating liquid. The liquid crystal aligning agent of the present invention is also preferably in the form of a coating liquid containing the component (A) and the compound (B), and a solvent.

The content (concentration) of the polymer component contained in the liquid crystal aligning agent of the present invention may properly be adjusted depending upon the setting of the coating film to be formed, and for forming a uniform coating film without defects, it is preferably 1 mass% of more, and in view of storage stability of the solution, preferably 10 mass% or less.

The total content of the polymer (A) in the liquid crystal aligning agent is, with a view to suitably obtaining the effects of the present invention, per 100 parts by mass of the entire polymer components contained in the liquid crystal aligning agent (p), preferably 10 parts by mass or more, more preferably 20 parts by mass or more, further preferably 50 parts by mass or more.

The solvent contained in the liquid crystal aligning agent is not particularly limited so long as the polymer components are uniformly dissolved. Its specific examples include N,N-dimethylformamide, N,N-dimethylacetamide, N,N-dimethyllactamide, N-methyl-2-pyrrolidone, N-ethyl-2-pyrrolidone, dimethylsulfoxide, γ-butyrolactone, γ-valerolactone, 1,3-dimethyl-2-imidazolidinone, methyl ethyl ketone, cyclohexanone, cyclopentanone, 3-methoxy-N,N-dimethylpropanamide, 3-butoxy-N,N-dimethylpropanamide, N-(n-propyl)-2-pyrrolidone, N-isopropyl-2-pyrrolidone, N-(n-butyl)-2-pyrrolidone, N-(tert-butyl)-2-pyrrolidone, N-(n-pentyl)-2-pyrrolidone, N-methoxypropyl-2-pyrrolidone, N-ethoxyethyl-2-pyrrolidone, N-methoxybutyl-2-pyrrolidone and N-cyclohexyl-2-pyrrolidone (they may generically be referred to as "good solvent"). Among them, preferred are N-methyl-2-pyrrolidone, N-ethyl-2-pyrrolidone, 3-methoxy-N,N-dimethylpropanamide, 3-butoxy-N,N-dimethylpropanamide and γ-butyrolactone. The content of the good solvent is, to the entire solvent contained in the liquid crystal aligning agent, preferably 20 to 99 mass%, more preferably 20 to 90 mass%, particularly preferably 30 to 80 mass%.

Further, as the solvent contained in the liquid crystal aligning agent, it is preferred to use a solvent mixture containing a solvent (poor solvent) which improves coating property when the liquid crystal aligning agent is applied and surface smoothness of the obtainable coating film, in combination with the above solvent. Specific examples of the poor solvent used in combination will be described below, however, the poor solvent is not limited thereto.

For example, diisopropyl ether, diisobutyl ether, diisobutylcarbinol(2,6-dimethyl-4-heptanol), ethylene glycol dimethyl ether, ethylene glycol diethyl ether, ethylene glycol dibutyl ether, 1,2-dibutoxyethane, diethylene glycol dimethyl ether, diethylene glycol diethyl ether, 4-hydroxy-4-methyl-2-pentanone, diethylene glycol methyl ethyl ether, diethylene glycol dibutyl ether, 3-ethoxybutyl acetate, 1-methylpentyl acetate, 2-ethylbutyl acetate, 2-ethylhexyl acetate, ethylene glycol monoacetate, ethylene glycol diacetate, propylene carbonate, ethylene carbonate, ethylene glycol monobutyl

ether, ethylene glycol monoisoamyl ether, ethylene glycol monohexyl ether, propylene glycol monobutyl ether, 1-(2-butoxyethoxy)-2-propanol, 2-(2-butoxyethoxy)-1-propanol, propylene glycol monomethyl ether acetate, propylene glycol diacetate, dipropylene glycol monomethyl ether, dipropylene glycol monoethyl ether, dipropylene glycol dimethyl ether, ethylene glycol monobutyl ether acetate, diethylene glycol monoethyl ether acetate, diethylene glycol monobutyl ether acetate, 2-(2-ethoxyethoxy)ethyl acetate, diethylene glycol acetate, propylene glycol diacetate, n-butyl acetate, propylene glycol monoethyl ether acetate, methyl 3-methoxypropionate, ethyl 3-ethoxypropionate, ethyl 3-methoxypropionate, propyl 3-methoxypropionate, butyl 3-methoxypropionate, n-butyl lactate, isoamyl lactate, diethylene glycol monoethyl ether, and diisobutyl ketone (2,6-dimethyl-4-heptanone) may be mentioned. The content of the poor solvent is, to the entire solvent contained in the liquid crystal aligning agent, preferably 1 to 80 mass%, more preferably 10 to 80 mass%, particularly preferably 20 to 70 mass%. The type and the content of the poor solvent may optionally be selected depending upon the apparatus to apply the liquid crystal aligning agent, the coating conditions, coating environment, etc.

Among them, diisobutylcarbinol, propylene glycol monobutyl ether, propylene glycol diacetate, diethylene glycol diethyl ether, dipropylene glycol monomethyl ether, dipropylene glycol dimethyl ether, 4-hydroxy-4-methyl-2-pentanone, ethylene glycol monobutyl ether, ethylene glycol monobutyl ether acetate and diisobutyl ketone are preferred.

Preferred combinations of the good solvent and the poor solvent include N-methyl-2-pyrrolidone and ethylene glycol monobutyl ether; N-methyl-2-pyrrolidone, γ-butyrolactone and ethylene glycol monobutyl ether; N-methyl-2-pyrrolidone, γ-butyrolactone and propylene glycol monobutyl ether; N-ethyl-2-pyrrolidone and propylene glycol monobutyl ether; N-methyl-2-pyrrolidone, γ-butyrolactone, 4-hydroxy-4-methyl-2-pentanone and diethylene glycol diethyl ether; N-methyl-2-pyrrolidone, γ-butyrolactone, propylene glycol monobutyl ether and diisobutyl ketone; N-methyl-2-pyrrolidone, γ-butyrolactone, propylene glycol monobutyl ether and diisopropyl ether; N-methyl-2-pyrrolidone, γ-butyrolactone, propylene glycol monobutyl ether and diisobutylcarbinol; N-methyl-2-pyrrolidone, γ-butyrolactone and dipropylene glycol dimethyl ether; N-methyl-2-pyrrolidone, propylene glycol monobutyl ether and dipropylene glycol dimethyl ether; and the like.

The liquid crystal aligning agent of the present invention may additionally contain a component other than the polymer components and the solvent (hereinafter also referred to as additive component). Such an additive component may, for example, be a compound to increase the strength of the liquid crystal alignment film (hereinafter also referred to as crosslinkable compound), an adhesion improving agent to improve the adhesion between the liquid crystal alignment film and a substrate or the adhesion between the liquid crystal alignment film and a sealing agent, a dielectric or a conductive substance to adjust the dielectric constant or the electrical resistance of the liquid crystal alignment film, a stabilizer to improve the stability of varnish, or a surfactant or an antifoaming agent to adjust the surface tension of varnish.

The crosslinkable compound may, for example, be at least one crosslinkable compound selected from the group consisting of a crosslinkable compound (c-1), having at least one substituent selected from an epoxy group, an oxetanyl group, an oxazoline structure, a cyclocarbonate group, a blocked isocyanate group, a hydroxy group and an alkoxy group, and a crosslinkable compound (c-2) having a polymerizable unsaturated group.

Preferred specific examples of the crosslinkable compounds (c-1) and (c-2) include the following compounds.

Compounds having an epoxy group: ethylene glycol diglycidyl ether, polyethylene glycol diglycidyl ether, propylene glycol diglycidyl ether, tripropylene glycol diglycidyl ether, polypropylene glycol diglycidyl ether, neopentyl glycol diglycidyl ether, 1,6-hexanediol diglycidyl ether, glycerin diglycidyl ether, dibromoneopentyl glycol diglycidyl ether, 1,3,5,6-tetraglycidyl-2,4-hexanediol, bisphenol A epoxy resins such as Epikote 828 (manufactured by Mitsubishi Chemical Corporation); bisphenol F epoxy resins such as Epikote 807 (manufactured by Mitsubishi Chemical Corporation); hydrogenated bisphenol A epoxy resins such as YX-8000 (manufactured by Mitsubishi Chemical Corporation); biphenyl skeleton-containing epoxy resins such as YX6954BH30 (manufactured by Mitsubishi Chemical Corporation); phenol novolak epoxy resins such as EPPN-201 (manufactured by Nippon Kayaku Co., Ltd.); (o,m,p-)cresol novolak epoxy resins such as EOCN-102S (manufactured by Nippon Kayaku Co., Ltd.); compounds having a tertiary nitrogen atom bonded to an aromatic carbon atom, such as tetrakis(glycidyloxymethyl)methane, N,N, N', N'-tetraglycidyl-1,4-phenylenediamine, N, N, N', N'-tetraglycidyl-2,2'-dimethyl-4.4'-diam inobiphenyl, 2,2-bis[4-(N,N-diglycidyl-4-aminophenoxy)phenyl]propane and N,N,N',N'-tetraglycidyl-4,4'-diaminodiphenylmethane; compounds having a tertiary nitrogen atom bonded to an aliphatic carbon atom, such as N,N, N', N'-tetraglycidyl-1,2-diaminocyclohexane, N,N,N',N'-tetraglycidyl-1,3-diaminocyclohexane, N,N, N', N'-tetraglycidyl-1,4-diaminocyclohexane, bis(N, N-diglycidyl-4-am inocyclohexyl)methane, bis(N,N-diglycidyl-2-methyl-4-aminocyclohexyl)methane, bis(N,N-diglycidyl-3-methyl-4-aminocyclohexyl)methane, 1,3-bis(N,N-diglycidylaminomethyl)cyclohexane, 1,4-bis(N,N-diglycidylaminomethyl)cyclohexane, 1,3-bis(N,N-diglycidylaminomethyl)benzene, 1,4-bis(N,N-diglycidylaminomethyl)benzene, 1,3,5-tris(N,N-diglycidylaminomethyl)cyclohexane and 1,3,5-tris(N,N-diglycidylaminomethyl)benzene; isocyanurate compounds such as triglycidyl isocyanurate including TEPIC (manufactured by Nissan Chemical Corporation); compounds described in JP-A-H10-338880, paragraph [0037] and compounds described in WO2017/170483;

compounds having an oxetanyl group: 1,4-bis{[(3-ethyl-3-oxetanyl)methoxy]methyl}benzene (ARON OXETAN OXT-121 (XDO)), bis[2-(3-oxetanyl)butyl]ether (ARON OXETAN OXT-221 (DOX)), 1,4-bis[(3-ethyloxetan-3-yl)methoxy]benzene (HQOX), 1,3-bis[(3-ethyloxetan-3-yl)methoxy]benzene (RSOX), 1,2-bis[(3-ethyloxetan-3-yl)methoxy]benzene (CTOX), and compounds having two or more oxetanyl groups as described in WO2011/132751, paragraphs [0170] to [0175];
compounds having an oxazoline structure: compounds such as 2,2'-bis(2-oxazoline) and 2,2'-bis(4-methyl-2-oxazoline); polymers and oligomers having an oxazoline group, such as Epocros (trade name, manufactured by Nippon Shokubai Co., Ltd.); and compounds described in JP-A-2007-286597, paragraph [0115];
compounds having a cyclocarbonate group: N,N,N',N'-tetra[(2-oxo-1,3-dioxolan-4-yl)methyl]-4,4'-diaminodiphenylmethane, N,N',-di[(2-oxo-1,3-dioxolan-4-yl)methyl]-1,3-phenylenediamine, and compounds described in WO2011/155577, paragraphs [0025] to [0030] and [0032];
compounds having a blocked isocyanate group: Coronate AP Stable M, Coronate 2503, 2515, 2507, 2513, 2555, Millionate MS-50 (each manufactured by Tosoh Corporation), Takenate B-830, B-815N, B-820NSU, B-842N, B-846N, B-870N, B-874N, B-882N (each manufactured by Mitsui Chemicals, Inc.), compounds having two or more protective isocyanate groups, as described in JP-A-2014-224978, paragraphs [0046] to [0047], and compounds having three or more protective isocyanate groups, as described in WO2015/141598, paragraphs [0119] to [0120];
compounds having a hydroxy group and/or an alkoxy group: N,N,N',N'-tetrakis(2-hydroxyethyl)adipamide, 2,2-bis(4-hydroxy-3,5-dihydroxymethylphenyl)propane, 2,2-bis(4-hydroxy-3, 5-dimethoxyphenyl)propane, 2,2-bis(4-hydroxy-3,5-dihydroxymethylphenyl)-1,1,1,3,3,3-hexafluoropropane, compounds described in WO2015/072554 and in JP-A-2016-118753, paragraph [0058], compounds described in JP-A-2016-200798, and compounds described in WO2010/074269;
crosslinkable compounds having a polymerizable unsaturated group: glycerin mono(meth)acrylate, glycerin di(meth)acrylate (1,2-, 1,3- mixture), glycerin tris(meth)acrylate, glycerol 1,3-diglycerolate di(meth)acrylate, pentaerythritol tri(meth)acrylate, diethylene glycol mono(meth)acrylate, triethylene glycol mono(meth)acrylate, tetraethylene glycol mono(meth)acrylate, pentaethylene glycol mono(meth)acrylate and hexaethylene glycol mono(meth)acrylate.

The above compounds are examples of the crosslinkable compound, and the crosslinkable compound is not limited thereto. For example, components other than the above, as disclosed in WO2015/060357, paragraph [0105] at page 53 to [0116] at page 55 may be mentioned. The crosslinkable compounds may be used in combination of two or more.
In a case where the crosslinkable compound is used, the content of the crosslinkable compound in the liquid crystal aligning agent is, per 100 parts by mass of the polymer components contained in the liquid crystal aligning agent, preferably 0.5 to 20 parts by mass, more preferably 1 to 15 parts by mass.
The adhesion improving agent may, for example, be a silane coupling agent such as 3-aminopropyltrimethoxysilane, 3-aminopropyltriethoxysilane, 3-aminopropyldiethoxymethylsilane, 2-aminopropyltrimethoxysilane, 2-aminopropyltriethoxysilane, N-(2-aminoethyl)-3-aminopropyltrimethoxysilane, N-(2-aminoethyl)-3-aminopropylmethyldimethoxysilane, 3-ureidopropyltrimethoxysilane, 3-ureidopropyltriethoxysilane, N-ethoxycarbonyl-3-aminopropyltrimethoxysilane, N-ethoxycarbonyl-3-aminopropyltriethoxysilane, N-3-triethoxysilylpropyltriethylenetetramine, N-3-trimethoxysilylpropyl triethylenetetramine, 10-trimethoxysilyl-1,4,7-triazadecane, 10-triethoxysilyl-1,4,7-triazadecane, 9-trimethoxysilyl-3,6-diazanonyl acetate, 9-triethoxysilyl-3,6-diazanonyl acetate, N-benzyl-3-aminopropyltrimethoxysilane, N-benzyl-3-aminopropyltriethoxysilane, N-phenyl-3-aminopropyltrimethoxysilane, N-phenyl-3-aminopropyltriethoxysilane, vinyltrimethoxysilane, vinyltriethoxysilane, 2-(3,4-epoxycyclohexyl)ethyltrimethoxysilane, 3-glycidoxypropylmethyldimethoxysilane, 3-glycidoxypropyltrimethoxysilane, 3-glycidoxypropylmethyldiethoxysilane, 3-glycidoxypropyltriethoxysilane, p-styryltrimethoxysilane, 3-methacryloxypropylmethyldimethoxysilane, 3-methacryloxypropyltrimethoxysilane, 3-methacryloxypropylmethyldiethoxysilane, 3-methacryloxypropyltriethoxysilane, 3-acryloxypropyltrimethoxysilane, tris(3-trimethoxysilylpropyl) isocyanurate, 3-mercaptopropylmethyldimethoxysilane, 3-mercaptopropyltrimethoxysilane, or 3-isocyanatopropyltriethoxysilane.
In a case where the adhesion improving agent is used, the content of the adhesion improving agent in the liquid crystal aligning agent is, per 100 parts by mass of the polymer components contained in the liquid crystal aligning agent, preferably 0.1 to 30 parts by mass, more preferably 0.1 to 20 parts by mass.
To the composition of the present invention, a stabilizer may be added for the purpose of improving the stability of varnish. Specific examples of the stabilizer include polyol compounds described in WO2011/129414 and amine compounds described in WO2021/171939.
To the composition of the present invention, a surfactant or an antifoaming agent may be added for the purpose of adjusting the surface tension of varnish, and commonly known ones may be used so long as they are not separated from the polymer, the solvent or the like. As the surfactant, for example, a cationic surfactant, an anionic surfactant and a nonionic surfactant may be used, and a nonionic surfactant is preferred.
Specific examples of the nonionic surfactant include, by trade names, Megafac (registered trademark) F-251, F-253, F-281, F-430, F-477, F-551, F-552, F-553, F-554, F-555, F-556, F-557, F-558, F-559, F-560, F-561, F-562, F-563, F-565, F-568, F-569, F-570, F-572, F-574, F-575, F-576, R-40, R-40-LM, R-41, R-94, RS-56, RS-72-K, RS-75, RS-76-E, RS-76-NS, RS-78, RS-90, DS-21 (manufactured by DIC Corporation), FC-4432 (manufactured by Sumitomo 3M Limited),

Surflon (registered trademark) S-242, S-243, S-420, S-431, S-386, S-611, S-647, S-651, S-653, S-656, S-658, S-693, S-CFJ (manufactured by Asahi Glass Co., Ltd.). The nonionic surfactant is not limited thereto.

As the antifoaming agent, a silicone antifoaming agent, an acrylic polymer antifoaming agent, a vinyl ether polymer antifoaming agent, etc. may be used, but the antifoaming agent is not limited thereto.

Specific examples of the antifoaming agent include KF-96, KF-6701, KS-7708, KS-66, KS-69, KS-7716, KS-602A, FA-600, X-50-1110D, KM-601S (manufactured by Shin-Etsu Silicone), Flowlen AC-230, AC-262H, AC-300, AC-303, AC-326F, AO-106, AO-108, AO-108AF (manufactured by Kyoeisha Chemical Co., Ltd.), BYK-051N, BYK-052N, BYK-053N, BYK-054, BYK-055, BYK-057, BYK-070, BYK-072, BYK-077, BYK-081, BYK-085, BYK-141, BYK-1681, BYK-1692SD, BYK-1709, BYK-1751, BYK-1752, BYK-1758, BYK-1759, BYK-1760, BYK-1795,BYK-1796,BYK-1797, BYK-1799, BYK-A500, BYK-A501, BYK-A505, BYK-A506, BYK-A515, BYK-A525, BYK-A530, BYK-A535, BYK-A550, BYK-A555, BYK-A560 (manufactured by BYK-Chemie Japan). The antifoaming agent is not limited thereto.

The surfactant and the antifoaming agent may be used alone or in combination of two or more, and the amount added is preferably 5 parts by mass or less per 100 parts by mass of the polymer.

(Liquid crystal alignment film)

The liquid crystal alignment film of the present invention is formed by using the liquid crystal aligning agent of the present invention.

The method for producing the liquid crystal alignment film of the present invention includes applying the above liquid crystal aligning agent to a substrate, baking the liquid crystal aligning agent, and irradiating the obtained film with polarized radiation.

As a preferred embodiment of the method for producing the liquid crystal alignment film of the present invention, for example, a method for producing the liquid crystal alignment film, including a step of applying the above liquid crystal aligning agent to a substrate (step (1)), a step of baking the applied liquid crystal aligning agent (step (2)), and as the case requires, a step of subjecting the film obtained in step (2) to alignment treatment (step (3)).

<Step (1)>

The substrate to which the liquid crystal aligning agent is applied, used in the present invention, is not particularly limited so long as it has high transparency, and a glass substrate, a silicon nitride substrate or a plastic substrate such as an acrylic substrate or a polycarbonate substrate may be used. It is preferred to use a substrate on which an ITO (Indium Tin Oxide) electrode or the like, to drive liquid crystal, is formed, in view of simplification of the process. Further, for a reflective liquid crystal display device, an opaque substrate such as a silicon wafer may be used for only one of the substrates, and in such a case, for the electrode, a light-reflecting material such as silver, aluminum, nickel, or an alloy containing any of the above metals, may be used.

As a method of applying the liquid crystal aligning agent to the substrate for forming a film, screen printing, offset printing, flexographic printing, ink jet printing or spraying may, for example, be mentioned. Among them, coating by ink jet printing is suitably employed.

<Step (2)>

Step (2) is a step of baking the liquid crystal aligning agent applied to the substrate to form a film. After the liquid crystal aligning agent is applied to the substrate, the solvent may be evaporated, or the amic acid or the amic acid ester in the polymer may be subjected to thermal imidization, by a heating means such as a hot plate, a hot air-circulating oven or an IR (infrared) oven. The drying and baking step after the liquid crystal aligning agent of the present invention is applied, may be conducted at optional temperature for optional time, and may be conducted several times. As the temperature at which the solvent in the liquid crystal aligning agent is evaporated may, for example, be 40 to 180°C. With a view to shortening the process, this step may be conducted at 40 to 150°C. The baking time is not particularly limited, and may be 1 to 10 minutes, or 1 to 5 minutes. In a case where thermal imidization of the amic acid or the amic acid ester in the polymer is conducted, after the above step of evaporating the solvent, a step of baking the liquid crystal aligning agent for example at 150 to 300°C, or 150 to 250°C, may be conducted. The baking time is not particularly limited and may be 5 to 40 minutes, or 5 to 30 minutes.

If the film-form product after baking is too thin, reliability of the liquid crystal display device may decrease, preferably and thus its thickness is 5 to 300 nm, more preferably 10 to 200 nm.

<Step (3)>

Step (3) is a step of subjecting the film obtained in step (2) to alignment treatment, as the case requires. In the

case of an in-plane switching liquid crystal display device such as an IPS device or a FFS device, aligning ability is imparted by applying aligning ability-imparting treatment to the formed coating film. In the case of a vertically aligned liquid crystal display device such as a VA device or a PSA device, the formed coating film may be used as it is as the liquid crystal alignment film, however, an aligning ability-imparting treatment may be applied to the coating film. As the alignment treatment method for the liquid crystal alignment film, rubbing treatment may be employed, or optical alignment treatment may be employed. As the optical alignment treatment, a method of irradiating the surface of the film-formed product with radiation polarized in a certain direction, and conducting heat treatment as the case requires, to impart liquid crystal alignment property (also called liquid crystal alignment ability) may be mentioned, but the optical alignment treatment is not particularly limited.

(Liquid crystal display device)

The liquid crystal display device of the present invention has the liquid crystal alignment film of the present invention.

The liquid crystal alignment film of the present invention is useful as a liquid crystal alignment film for a vertically aligned liquid crystal display device such as a VA device or a PSA device, with a view to obtaining high liquid crystal alignment property, however, the application of the liquid crystal alignment film is not particularly limited.

The liquid crystal display device may be produced by obtaining a substrate equipped with the liquid crystal alignment film formed from the liquid crystal aligning agent of the present invention, preparing a liquid crystal cell by a known method, and disposing liquid crystal in the liquid crystal cell. Specifically, the following two methods may be mentioned.

A first method is disposing two substrates so that their respective liquid crystal alignment films face each other via a space (cell gap). Peripheries of the two substrates are bonded with a sealing agent, a liquid crystal composition is injected into a cell gap partitioned with the substrate surface and the sealing agent to bring the liquid crystal composition into contact with the film surface, and the inlet is sealed.

A second method is a means called ODF (One Drop Fill) method. To a predetermined position on one of the two substrates having the liquid crystal alignment film formed thereon, for example an ultraviolet curable sealing agent is applied, and to several predetermined positions on the liquid crystal alignment film surface, a liquid crystal composition is dropped. Then, the other substrate is bonded so that the liquid crystal alignment films face each other to spread the liquid crystal composition over the entire substrate surface to be brought into contact with the film surface. Then, the entire surface of the substrates is irradiated with ultraviolet light to cure the sealing agent.

In either of the first method and the second method, it is preferred to further heat the liquid crystal composition to a temperature at which the composition is in an isotropic phase, and then air-cool the composition to room temperature to remove flow induced alignment at the time of filling the liquid crystal.

In a case where rubbing treatment is conducted on the coating film, the two substrates are disposed to face each other so that the rubbing directions of the respective coating films form a predetermined angle, for example, they are at right angles or antiparallel to each other. Also in a case where optical alignment treatment is conducted, the two substrates are disposed to face each other so that the alignment directions form a predetermined angle, for example, they are at right angles or antiparallel to each other.

As the sealing agent, for example, an epoxy resin containing a curing agent and aluminum oxide spheres as a spacer may be used. The liquid crystal may be nematic liquid crystal or smectic liquid crystal, and is preferably nematic liquid crystal.

The liquid crystal material may be either a positive liquid crystal material or a negative liquid crystal material, and is preferably a negative liquid crystal material.

EXAMPLES

Now, the present invention will be described in further detail with reference to Examples. However, the present invention is by no means restricted thereto. The abbreviations for compounds are as follows.

(Organic solvent)

NMP: N-methyl-2-pyrrolidone
BCS: butylcellosolve

(Diamine)

DA-1 to DA-5: compounds represented by the following formulae (DA-1) to (DA-5) (Tetracarboxylic acid dianhydrides)
DAH-1 to DAH-4: compounds represented by the following formulae (DAH-1) to (DAH-4)

(Benzotriazole additive)

B-1 to B-2: compounds represented by the following formulae (B-1) and (B-2) (Crosslinking agent)
C-1: compound represented by the following formula (C-1)

(Stabilizer)

D-1 to D-2: compounds represented by the following formulae (D-1) to (D-2) (Surfactant)
E-1: F-563 (manufactured by DIC Corporation, nonionic fluorine group/hydrophilic group-containing oligomer)

(Other additive)

F-1 to F-4: compounds represented by the following formulae (F-1) to (F-4)

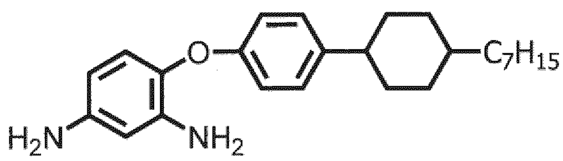

DA-1

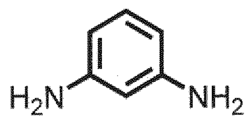

DA-2

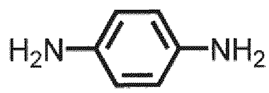

DA-3

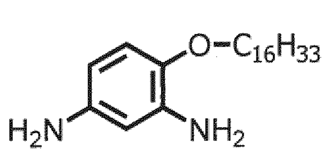

DA-4

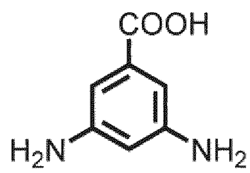

DA-5

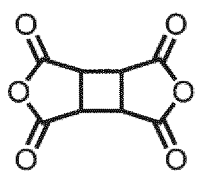

DAH-1

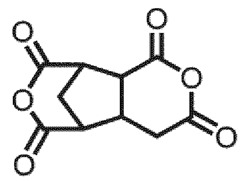

DAH-2

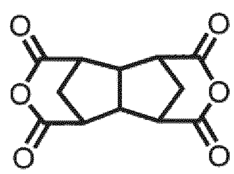

DAH-3

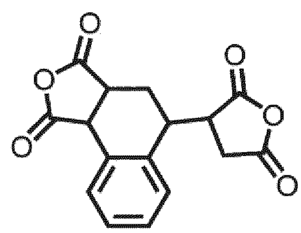

DAH-4

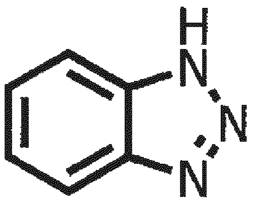

B-1

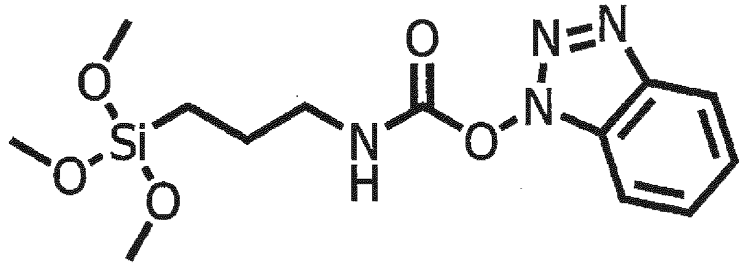

B-2

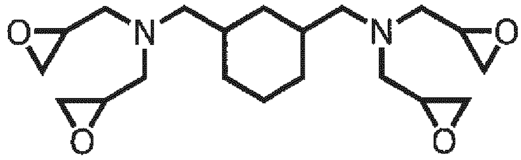

C-1

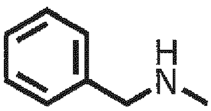

D-1

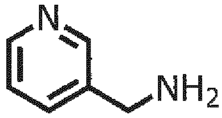

D-2

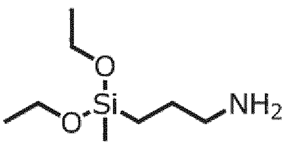

F-1

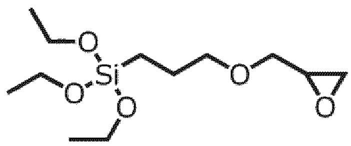

F-2

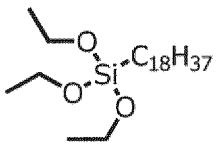

F-3

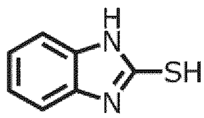

F-4

<Imidization degree measurement>

A polyimide powder was dissolved in NMP to prepare a solution having a solid content concentration of 8 mass%, and 0.38 g of the NMP solution was weighed. 1.0 mL of deuterated dimethylsulfoxide (DMSO-$d_6$, 0.05% TMS mixture) was added to the NMP solution and homogenized, and put in a NMR sample tube (NMR sampling tube standard Φ5 manufactured by KUSANO SCIENTIFIC CORPORATION). The NMP solution was subjected to 500 MHz proton NMR measurement by an NMR measuring apparatus (JNW-ECA500) manufactured by JEOL Ltd. The imidization degree was obtained in accordance with the following formula from the peak integrated value of proton derived from a structure which would not change as between before and after the imidization as standard proton, and the peak integrated value of proton derived from a NH group of the amic acid which appeared in the vicinity of 9.5 to 10.0 ppm. In the following formula, x is the peak integrated value of proton derived from the NH group of the amic acid, y is the peak integrated value of standard proton, and $\alpha$ is the proportion of the number of standard proton per one proton of the NH group of the amic acid in the case of a polyamic acid (imidization degree of 0%).

$$\text{Imidization degree (\%)} = (1-\alpha \cdot x/y) \times 100$$

<Calculation of content ratio of carboxy group bonded to aromatic ring (hereinafter also referred to as aromatic carboxy group) in polymer>

Noting the mass ratio of the carboxy group moiety in the aromatic carboxy group-containing compound, the content ratio of the aromatic carboxy group in the polymer was calculated. For example, in a case where the polymer component is the polyamic acid containing only DA-5 partial structure as the aromatic carboxy group, the following formula was employed.

Ratio [%] of aromatic carboxy group in polymer = (molecular weight of carboxy group (45.0)) × (content ratio of DA-5 in the entire diamine) / ((average molecular weight of acid dianhydride monomer) + (average molecular weight of diamine monomer))

<Production examples>

(Production Example 1)

Into a 200 mL four-necked flask equipped with a stirring device and a nitrogen introduction tube, DA-1 (15.22 g, 40 mmol) was added, and then NMP (74.3 g) was added, followed by stirring while nitrogen was supplied to dissolve DA-1. DAH-1 (7.72 g, 39 mmol) was added to the diamine solution with stirring, and NMP (17.4 g) was added, followed by stirring at 40°C further for 20 hours to obtain a polyamic acid solution (PAA-1) having a solid content concentration of 20 mass%

(Production Example 2)

Into a 100 mL four-necked flask equipped with a stirring device and a nitrogen introduction tube, 30 g (10.4 mmol) of the polyamic acid solution PAA-1 was put, and 36.7 g of NMP was added to adjust the solid content concentration to 9 mass%, followed by stirring for 30 minutes. To the obtained polyamic acid solution, 2.3 g (2.2 molar equivalents to the polyamic acid) of acetic anhydride and 0.4 g (0.5 molar equivalents to the polyamic acid) of pyridine were added, followed by stirring at room temperature for 30 minutes, and the solution was heated at 55°C for 4 hours to conduct chemical imidization. The obtained reaction solution was poured into 300 mL of methanol with stirring, the precipitate was collected by filtration, and the same operation was conducted twice to clean a resin power, which was dried at 100°C for 8 hours to obtain a polyimide resin powder. 5.0 g of the obtained polyimide resin powder was put in a 100 mL Erlenmeyer flask and NMP was added to a solid content concentration of 8%, followed by stirring at 50°C for 24 hours to dissolve the polyimide resin powder to obtain a polyimide solution (PI-1-a). The imidization degree of the polyimide resin was 85%.

(Production Example 3)

A polyimide solution (PI-1-b) was obtained in the same manner as in Production Example 2 using 30 g (10.4 mmol) of PAA-1, except that the solid content concentration at the time of chemical imidization was 6.5 mass%, acetic anhydride used was 2.7 g (2.5 molar equivalents to the polyamic acid), pyridine used was 1.6 g (2.0 molar equivalents to the polyamic acid) and the heating conditions were at 50°C for 2 hours. The imidization degree of the obtained polyimide resin was 81%.

(Production Example 4)

A polyimide solution (PI-1-c) was obtained in the same manner as in Production Example 3 using 30 g (10.4 mmol) of PAA-1, except that the heating conditions were at 50°C for 1 hour and 45 minutes. The imidization degree of the obtained polyimide resin was 74%.

(Production Example 5)

A polyimide solution (PI-1-d) was obtained in the same manner as in Production Example 3 using 30 g (10.4 mmol) of PAA-1, except that the heating conditions were at 50°C for 1 hour and 30 minutes. The imidization degree of the obtained polyimide resin was 63%.

(Production Example 6)

A polyimide solution (PI-1-e) was obtained in the same manner as in Production Example 3 using 30 g (10.4 mmol) of PAA-1, except that the heating conditions were at 50°C for 1 hour. The imidization degree of the obtained polyimide resin was 54%.

(Production Example 7)

Into a 200 mL four-necked flask equipped with a stirring device and a nitrogen introduction tube, DA-1 (9.51 g, 25 mmol) and DA-2 (2.70 g, 25 mmol) were added, and then NMP (28.5 g) was added, followed by stirring while nitrogen was supplied to dissolve DA-1 and DA-2. DAH-2 (2.24 g, 10 mmol) was added to the diamine solution with stirring, and NMP (15.7 g) was added, followed by stirring at 60°C further for 3 hours. The solution was cooled to room temperature, DAH-1

(7.75 g,39.5 mmol) was added with stirring, and NMP (45.7 g) was added, followed by stirring at 40°C further for 12 hours to obtain a polyamic acid solution (PAA-2) having a solid content concentration of 20 mass%.

(Production Example 8)

A polyimide solution (PI-2) was obtained in the same manner as in Production Example 3 using 10 g (4.4 mmol) of PAA-2, except that acetic anhydride used for chemical imidization was 2.3 g (5.0 molar equivalents to the polyamic acid), pyridine used was 0.7 g (2.0 molar equivalents to the polyamic acid) and the heating conditions were at 50°C for 3 hours. The imidization degree of the obtained polyimide resin was 75%.

(Production Example 9)

Into a 200 mL four-necked flask equipped with a stirring device and a nitrogen introduction tube, DA-1 (9.51 g, 25 mmol) and DA-2 (2.70 g, 25 mmol) were added, and NMP (28.5 g) was added, followed by stirring while nitrogen was supplied to dissolve DA-1 and DA-2. DAH-3 (2.50 g, 10 mmol) was added to the diamine solution with stirring, and NMP (15.7 g) was added, followed by stirring at 80°C further for 5 hours. The solution was cooled to room temperature, DAH-1 (7.75 g, 39.5 mmol) was added to the solution with stirring, and NMP (45.7 g) was added, followed by stirring at 40°C further for 12 hours to obtain a polyamic acid solution (PAA-3) having a solid content concentration of 20 mass%.

(Production Example 10)

A polyimide solution (PI-3) was obtained in the same manner as in Production Example 3 using 10 g (4.4 mmol) of PAA-3, except that acetic anhydride used for chemical imidization was 2.3 g (5.0 molar equivalents to the polyamic acid), pyridine used was 0.9 g (2.5 molar equivalents to the polyamic acid) and the heating conditions were at 60°C for 4 hours. The imidization degree of the obtained polyimide resin was 81%.

(Production Example 11)

Into a 200 mL four-necked flask equipped with a stirring device and a nitrogen introduction tube, DA-3 (3.89 g, 36 mmol) and DA-4 (1.39 g, 4 mmol) were added, and NMP (25.8 g) was added, followed by stirring while nitrogen was supplied to dissolve DA-3 and DA-4. DAH-4 (11.77 g, 39.2 mmol) was added to the diamine solution with stirring, and NMP (42.4 g) was added, followed by stirring at room temperature further for 20 hours to obtain a polyamic acid solution (PAA-4) having a solid content concentration of 20 mass%.

(Production Example 12)

Chemical imidization was conducted by a known method using 10 g of PAA-4. The obtained powder was dissolved in NMP to obtain a polyimide solution (PI-4) having a solid content concentration of 8 mass%. The imidization degree of the obtained polyimide resin was 88%.

(Production Example 13)

Into a 200 mL four-necked flask equipped with a stirring device and a nitrogen introduction tube, DA-1 (4.57 g, 12 mmol) and DA-5 (4.26 g, 28 mmol) were added, and NMP (43.1 g) was added, followed by stirring while nitrogen was supplied to dissolve DA-1 and DA-5. DAH-3 (7.51 g, 30 mmol) was added to the diamine solution with stirring, and NMP (5.9 g) was added, followed by stirring at 80°C further for 5 hours. The solution was cooled to room temperature, DAH-1 (1.88 g, 9.6 mmol) was added with stirring, and NMP (23.9 g) was added, followed by stirring at 40°C further for 12 hours to obtain a polyamic acid solution (PAA-5) having a solid content concentration of 20 mass%.

(Production Example 14)

Chemical imidization was conducted by a known method using 10 g of PAA-5. The obtained powder was dissolved in NMP to obtain a polyimide solution (PI-5) having a solid content concentration of 8 mass%. The imidization degree of the obtained polyimide resin was 81%.

<Example 1>

Into a sample tube in which a stirrer was put, the polyimide solution (PI-1-a) obtained in Synthesis Example 1,

NMP and BCS were added, and additives B-1 and C-1 were added respectively in amounts of 6 parts by mass and 3 parts by mass per 100 parts by mass of the polymer solid content, followed by stirring for 30 minutes, to obtain a liquid crystal aligning agent (A1) in which the polyimide solution (PI-1-a) had a solid content concentration of 4.5 mass% and the solvent composition by mass ratio was NMP:BCS=60:40.

<Example 2 to 12, Comparative Examples 1 to 9>

Liquid crystal aligning agents (A2) to (A12) and (X1) to (X9) were obtained in the same manner as in Example 1 except that the type and the amount of the polymer component and the additives used were changed as identified in the following Table 1. In Table 1, the values of (B) to (F) are blend ratios (parts by mass) of the additives per 100 parts by mass of the entire polymer component (A) used for preparation of the liquid crystal aligning agent.

[Table 1]

| | Liquid crystal aligning agent | (A) polymer | | (B) | | (C) | (D) | | (E) | Other additives (F) | | | | Ratio of aromatic carboxylic acid [%] |
|---|---|---|---|---|---|---|---|---|---|---|---|---|---|---|
| | | A | Imidization degree [%] | B-1 | B-2 | C-1 | D-1 | D-2 | E-1 | F-1 | F-2 | F-3 | F-4 | |
| Ex. 1 | (A1) | PI-1-a | 85 | 6 | - | 3 | - | - | - | - | - | - | - | 0 |
| Ex. 2 | (A2) | PI-1-a | 85 | 6 | - | 3 | 1 | - | 0.1 | - | - | - | - | 0 |
| Ex. 3 | (A3) | PI-1-a | 85 | - | 6 | 3 | - | - | - | - | - | - | - | 0 |
| Ex. 4 | (A4) | PI-1-c | 74 | - | 6 | 3 | - | - | - | - | - | - | - | 0 |
| Ex. 5 | (A5) | PI-1-d | 63 | - | 6 | 3 | - | - | - | - | - | - | - | 0 |
| Ex. 6 | (A6) | PI-1-e | 54 | - | 6 | 3 | - | - | - | - | - | - | - | 0 |
| Ex. 7 | (A7) | PAA-1 | 0 | - | 6 | 3 | 1 | - | 0.1 | - | - | - | - | 0 |
| Ex. 8 | (A8) | PI-1-a | 85 | - | 6 | 3 | 1 | - | 0.1 | - | - | - | - | 0 |
| Ex. 9 | (A9) | PI-1-b | 81 | - | 6 | 3 | 1 | - | 0.1 | - | - | - | - | 0 |
| Ex. 10 | (A10) | PI-2 | 75 | - | 6 | 3 | - | - | - | - | - | - | - | 0 |
| Ex. 11 | (A11) | PI-3 | 81 | | 6 | 3 | - | - | - | - | - | - | - | 0 |
| Ex. 12 | (A12) | PI-4 | 88 | - | 6 | - | - | - | - | 5 | - | - | - | 0 |
| Comp. Ex. 1 | (X1) | PI-1-b | 81 | - | - | 3 | - | - | - | - | - | - | - | 0 |
| Comp. Ex. 2 | (X2) | PI-1-a | 85 | - | - | 3 | 1 | - | 0.1 | - | - | - | - | 0 |
| Comp. Ex. 3 | (X3) | PAA-1 | 0 | - | - | 3 | 1 | - | 0.1 | - | - | - | - | 0 |
| Comp. Ex. 4 | (X4) | PI-2 | 75 | - | - | 3 | - | - | - | - | - | - | - | 0 |
| Comp. Ex. 5 | (X5) | PI-1-a | 85 | - | - | 3 | 1 | - | 0.1 | - | 1 | - | - | 0 |
| Comp. Ex. 6 | (X6) | P I-1-a | 85 | - | - | 3 | 1 | - | 0.1 | - | - | 1 | - | 0 |

(continued)

| | Liquid crystal aligning agent | (A) polymer | | (B) | | (C) | (D) | | (E) | Other additives (F) | | | | Ratio of aromatic carboxylic acid [%] |
|---|---|---|---|---|---|---|---|---|---|---|---|---|---|---|
| | | A | Imidization degree [%] | B-1 | B-2 | C-1 | D-1 | D-2 | E-1 | F-1 | F-2 | F-3 | F-4 | |
| Comp. Ex. 7 | (X7) | PI-1-a | 85 | - | - | 3 | 1 | - | 0.1 | - | - | - | 6 | 0 |
| Comp. Ex. 8 | (X8) | PI-5 | 81 | - | - | - | - | 5 | - | - | - | - | - | 6.7 |
| Comp. Ex. 9 | (X9) | PI-5 | 81 | - | 20 | - | - | 5 | - | - | - | - | - | 6.7 |

<Preparation of migration resistance evaluation sample>

A silver pattern 2 as shown in Fig. 1 was prepared on a glass substrate 1 by vapor deposition. The thickness of silver was 100 nm. Each of varnishes of the liquid crystal aligning agents (A1) to (A12) and (X1) to (X9) was applied by spinning to the silver pattern glass substrate, and prebaked at 80°C for 2 minutes, and then post-baked at 120°C for 5 minutes to prepare a liquid crystal alignment film 3 having a thickness of about 300 nm. An electrically conductive tape 4 was bonded to both ends of an electrode to obtain an evaluation sample. A cross sectional view of the silver pattern substrate having a cured film formed thereon is shown in Fig. 2. The obtained sample was subjected to migration resistance evaluation by the following method.

<Migration resistance evaluation>

The above prepared migration resistance evaluation sample was placed under conditions of a temperature of 85°C and a relative humidity of 85%RH, and an anode and a cathode were connected to both ends of the silver pattern. A test of applying a voltage of 50 V for 50 hours so that electric field concentration would occur at the pattern tip portion, was conducted, and whether migration occurred or not by the test was confirmed. Whether migration occurred or not was confirmed by observing the pattern tip portion after the test with a microscope. The patterns after the test are shown in Figs. 3 and 4. A case where no precipitate was observed after the voltage application test as shown in Fig. 3 is rated "O", and a case where a precipitate was observed as shown in Fig. 4 is rated " ×".

<Preparation of liquid crystal display device>

The obtained liquid crystal aligning agent was applied by spin coating to an ITO surface of a glass substrate provided with a transparent electrode formed of an ITO film, dried on a hot plate at 80°C for 2 minutes, and then baked on a hot plate at 120°C for 5 minutes to obtain a substrate provided with a liquid crystal alignment film having a film thickness of 100 nm. Two such substrates provided with a liquid crystal alignment film were prepared and subjected to rubbing treatment so that the alignment directions would form 180° after bonding. The rubbing treatment was conducted by rayon cloth YA-20R manufactured by Yoshikawa Chemical Co., Ltd. with a roller having a diameter of 120 mm. The rubbing treatment was conducted under conditions of a number of revolutions of 1000 rpm, a moving speed of 25 mm/sec and an indentation of 0.3 mm. After the rubbing treatment, ultrasonic cleaning was conducted in pure water for 1 minute, followed by drying at 80°C for 15 minutes.

On the liquid crystal alignment film of one of the substrates after the rubbing treatment, 6 μm bead spacers were spread and a sealing agent (manufactured by Mitsui Chemicals, Inc., XN-1500T) was applied in a shape such that a liquid crystal inlet would be open. The other substrate was bonded so that the liquid crystal alignment film surfaces faced each other and the alignment directions formed 180°. The assembly was heated at 80°C for 15 minutes and then heated at 100°C for 90 minutes to thermally cure the sealing agent, and then air-cooled at room temperature to prepare an empty cell. To this empty cell, liquid crystal (manufactured by Merck, MLC-3022) was injected by vacuum injection method, and the inlet was sealed to prepare a liquid crystal cell.

<Voltage holding ratio (VHR) evaluation>

The voltage holding ratio was evaluated as follows. To the obtained liquid crystal cell, a voltage of 1V was applied at a temperature of 60°C for 60 μs, the voltage after 1667 ms was measured, and how the voltage could be held, that is a change from the initial value, was calculated as the voltage holding ratio. For measurement of the voltage holding ratio, a

voltage holding ratio measurement apparatus VHR-1 manufactured by TOYO Corporation was used. A case where VHR under the above conditions was 80% or higher is rated "O", and a case where it is less than 80% is rated " × ".

The results of the migration resistance evaluation and the voltage holding ratio evaluation are shown in Table 2. The liquid crystal alignment films formed by using the liquid crystal aligning agents in Examples resulted in favorable migration resistance. In Comparative Example 7 in which F-4 known as an anticorrosive, similarly to B-1 and B-2 included in the range of the compound (B) of the present invention, was used as an additive, the voltage holding ratio was poor, however, in Examples 2 and 8 in which B-1 and B-2 were used, the voltage holding ratio was favorable. Furter, in Comparative Example 9 in which the content of the carboxy group bonded to the aromatic ring was higher than 5 parts by mass, even though B-2 was used, the migration resistance was poor.

[Table 2]

| | Liquid crystal aligning agent | Migration resistance | VHR |
|---|---|---|---|
| Ex. 1 | A1 | ○ | - |
| Ex. 2 | A2 | ○ | ○ |
| Ex. 3 | A3 | ○ | - |
| Ex. 4 | A4 | ○ | - |
| Ex. 5 | A5 | ○ | - |
| Ex. 6 | A6 | ○ | - |
| Ex. 7 | A7 | ○ | - |
| Ex. 8 | A8 | ○ | ○ |
| Ex. 9 | A9 | ○ | - |
| Ex. 10 | A10 | ○ | - |
| Ex. 11 | A11 | ○ | - |
| Ex. 12 | A12 | ○ | - |
| Comp. Ex. 1 | X1 | × | ○ |
| Comp. Ex. 2 | X2 | × | ○ |
| Comp. Ex. 3 | X3 | × | × |
| Comp. Ex. 4 | X4 | × | - |
| Comp. Ex. 5 | X5 | × | - |
| Comp. Ex. 6 | X6 | × | - |
| Comp. Ex. 7 | X7 | ○ | × |
| Comp. Ex. 8 | X8 | × | - |
| Comp. Ex. 9 | X9 | × | - |

REFERENCE SYMBOLS

1: glass substrate
2: silver
3: liquid crystal alignment film
4: electrically conductive tape

The entire disclosure of Japanese Patent Application No. 2022-23238 filed on February 17, 2022 including specification, claims, drawings and summary is incorporated herein by reference in its entirety.

## Claims

1. A liquid crystal aligning agent comprising the following component (A) and a compound (B) represented by the following formula (1):

   component (A): a polymer (A) selected from the group consisting of a polyimide precursor obtained by polymerizing a tetracarboxylic acid derivative component containing at least one compound selected from the group consisting of tetracarboxylic acid dianhydride and its derivative, and a diamine component, and a polyimide which is an imidized product of the polyimide precursor, the polymer (A) having a content of a carboxy group bonded to an aromatic ring of 5 parts by mass or less per 100 parts by mass of the polymer;

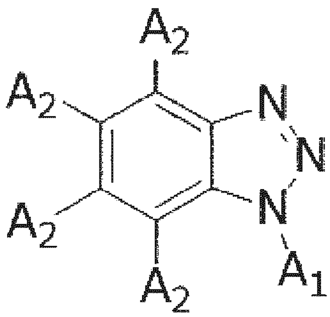

(1)

   wherein $A_1$ is a monovalent group having a trialkoxysilyl group or a hydrogen atom, and $A_2$ are each independently a $C_{1-4}$ alkyl group, a carboxy group or a hydrogen atom.

2. The liquid crystal aligning agent according to claim 1, wherein in the compound (B), at least one $A_2$ is a methyl group, an ethyl group, a propyl group, an isopropyl group, a butyl group or a carboxy group.

3. The liquid crystal aligning agent according to claim 1 or 2, wherein in the compound (B), $A_1$ is a monovalent group represented by "A-X-*", wherein A is a trialkoxysilyl group, X is $-(CH_2)_n-$ (wherein n is an integer of 1 to 18), or a group having at least one $-CH_2-$ of $-(CH_2)_n-$ replaced with -CONH-, -NHCO-, $-CO-N(CH_3)-$, -NH-, -O-, -COO- or -OCO-, optional hydrogen atom which X has may be replaced with a halogen atom, a carboxy group, a hydroxy group, a cyano group or a nitro group, and * is the binding position.

4. The liquid crystal aligning agent according to any one of claims 1 to 3, wherein the compound (B) is represented by any of the following formulae (b-1) to (b-4):

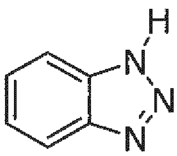

(b-1)

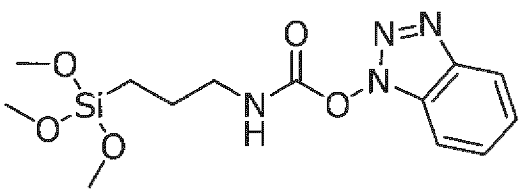

(b-2)

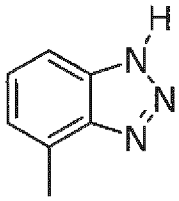

(b-3)

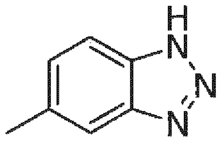

(b-4)

**5.** The liquid crystal aligning agent according to any one of claims 1 to 4, wherein in the component (A), the diamine component contains a diamine having at least one nitrogen atom-containing structure selected from a heterocyclic ring containing a nitrogen atom, a secondary amino group and a tertiary amino group.

**6.** The liquid crystal aligning agent according to any one of claims 1 to 5, wherein in the component (A), the tetracarboxylic acid derivative component contains a tetracarboxylic acid dianhydride represented by the following formula (2):

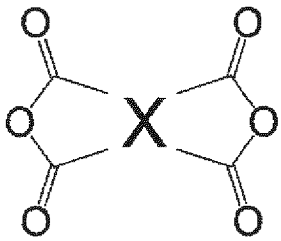

(2)

wherein X is a structure selected from the group consisting of the following formulae (x-1) to (x-17) and (xr-1) to (xr-2):

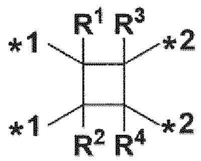

(x-1)

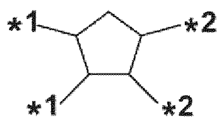

(x-2)

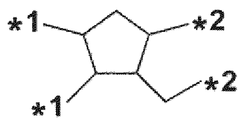

(x-3)

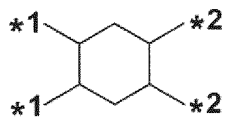

(x-4)

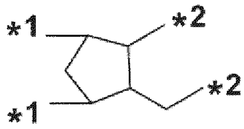

(x-5)

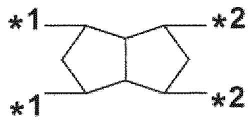

(x-6)

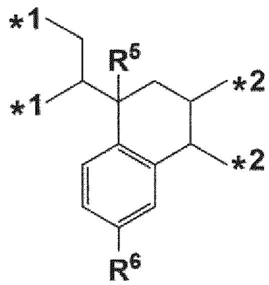

(x-7)

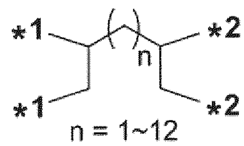

n = 1~12

(x-8)

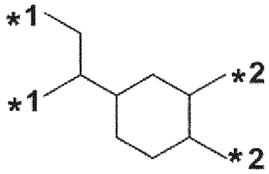

(x-9)

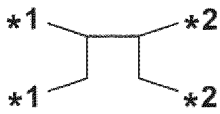

(x-10)

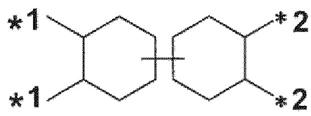

(x-11)

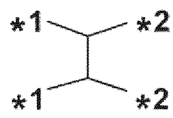

(x-12)

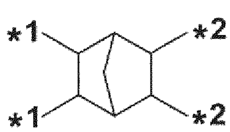

(x-13)

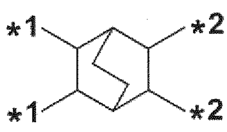

(x-14)

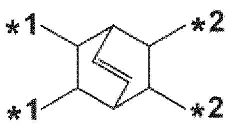

(x-15)

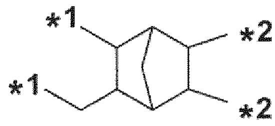

(x-16)

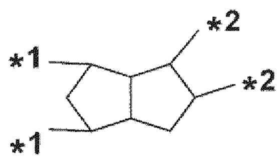

(x-17)

wherein $R^1$ to $R^4$ are each independently a hydrogen atom, a halogen atom, a $C_{1-6}$ alkyl group, a $C_{2-6}$ alkenyl group, a $C_{2-6}$ alkynyl group, a $C_{1-6}$ monovalent organic group containing a fluorine atom, a $C_{1-6}$ alkoxy group, a $C_{2-6}$ alkoxyalkyl group, a $C_{2-6}$ alkyloxycarbonyl group or a phenyl group, $R^5$ and $R^6$ are each independently a hydrogen atom or a methyl group, *1 is a binding site bound to one acid anhydride group, and *2 is a binding site bound to the other acid anhydride group.

**7.** The liquid crystal aligning agent according to any one of claims 1 to 6, wherein the content of the compound (B) is 0.1 to 30 parts by mass per 100 parts by mass of the component (A).

**8.** The liquid crystal aligning agent according to any one of claims 1 to 7, which further contains an additive component selected from a crosslinkable compound, adhesion improving agent, a dielectric or a conductive substance to adjust the dielectric constant or the electrical resistance of the liquid crystal alignment film, a stabilizer, a surfactant and an antifoaming agent.

**9.** A method for producing a liquid crystal alignment film, which comprises applying the liquid crystal aligning agent as defined in any one of claims 1 to 8 to a substrate, baking the liquid crystal aligning agent, and irradiating the obtained film with polarized radiation.

**10.** A method for producing a liquid crystal alignment film, which comprises applying the liquid crystal aligning agent as defined in any one of claims 1 to 8 to a substrate, baking the liquid crystal aligning agent, and applying rubbing treatment to the obtained film.

**11.** A liquid crystal alignment film, which is formed of the liquid crystal aligning agent as defined in any one of claims 1 to 8.

**12.** The method for producing a liquid crystal alignment film according to claim 9 or 10, wherein on the liquid crystal aligning agent-coated surface of the substrate, an electrode or wiring containing silver is disposed.

**13.** A liquid crystal display device, which has the liquid crystal alignment film as defined in claim 11.

**14.** The liquid crystal display device according to claim 13, wherein as an electrode and/or a wiring of the liquid crystal display device, a material containing silver is used.

Fig. 1

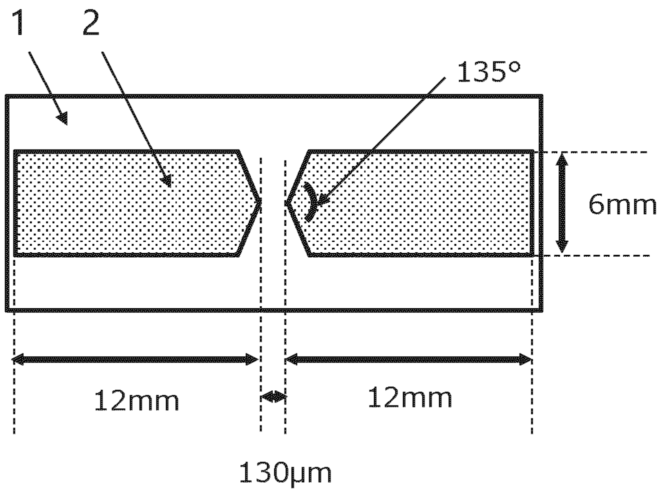


Fig. 2

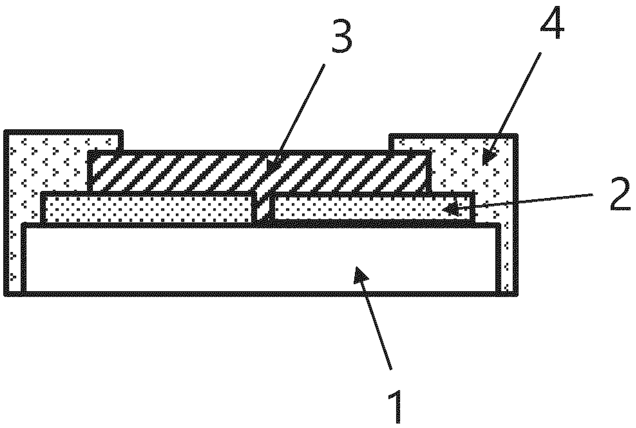

Fig. 3

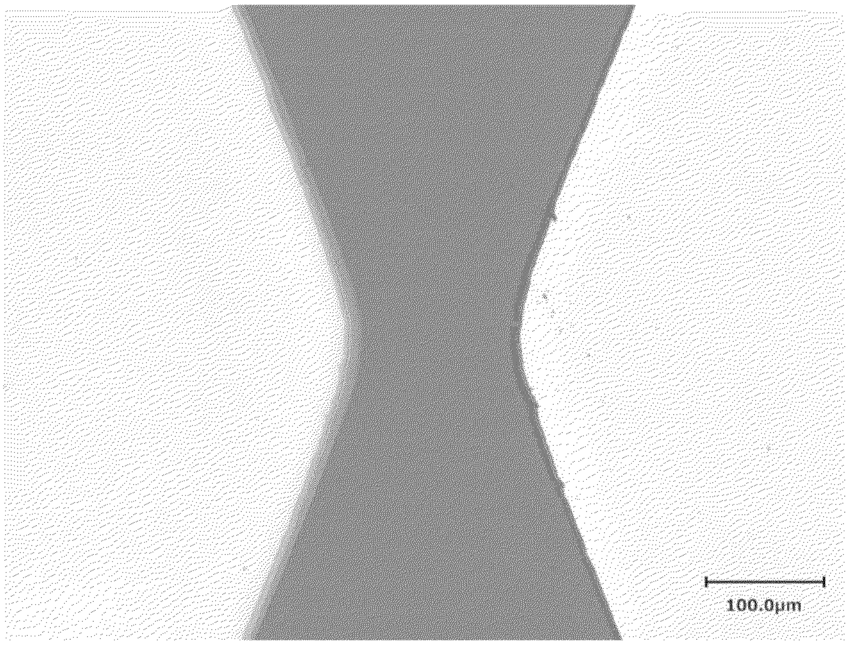


Fig. 4

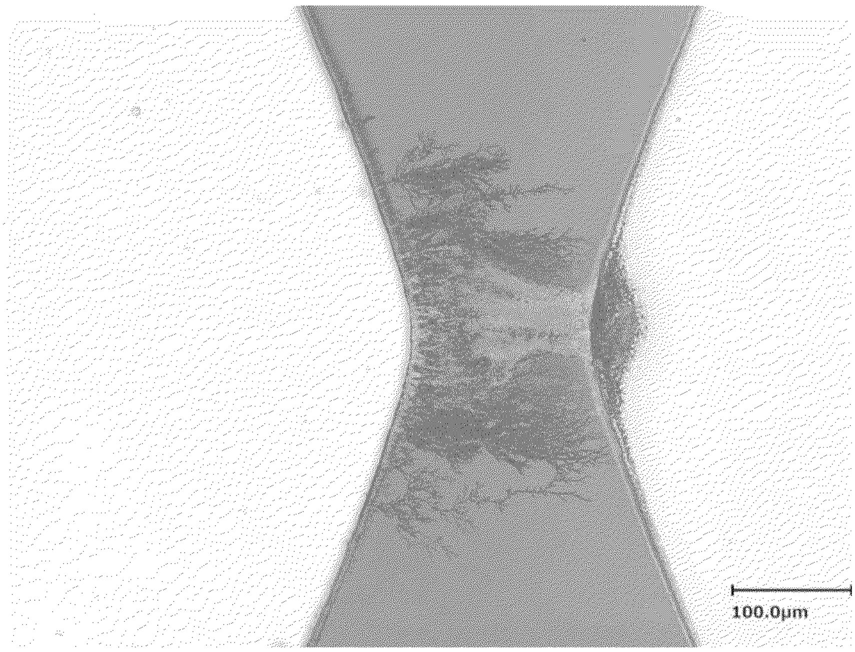

**INTERNATIONAL SEARCH REPORT**

International application No.
**PCT/JP2023/005220**

**A. CLASSIFICATION OF SUBJECT MATTER**

***G02F 1/1337***(2006.01)i; ***C08G 73/10***(2006.01)i
FI: G02F1/1337 525; C08G73/10

According to International Patent Classification (IPC) or to both national classification and IPC

**B. FIELDS SEARCHED**

Minimum documentation searched (classification system followed by classification symbols)

G02F1/1337; C08G73/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2017-54119 A (CHI MEI CORPORATION) 16 March 2017 (2017-03-16) paragraphs [0097], [0109], [0127]-[0174], comparative example 4 | 1-2, 4, 6-8, 10-11, 13<br>3, 5, 9, 12, 14 |
| A | WO 2018/216769 A1 (SHARP KABUSHIKI KAISHA) 29 November 2018 (2018-11-29) entire text, all drawings | 1-14 |
| A | WO 2016/194667 A1 (SHARP KABUSHIKI KAISHA) 08 December 2016 (2016-12-08) entire text, all drawings | 1-14 |
| A | US 2015/0307781 A1 (CHI MEI CORPORATION) 29 October 2015 (2015-10-29) entire text, all drawings | 1-14 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **12 April 2023** | **25 April 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/005220**

| Patent document cited in search report | Publication date (day/month/year) | Patent family member(s) | Publication date (day/month/year) |
|---|---|---|---|
| JP 2017-54119 A | 16 March 2017 | US 2017/0066969 A1<br>paragraphs [0108], [0120], [0138]-[0180]<br>TW 201710385 A<br>CN 106497576 A | |
| WO 2018/216769 A1 | 29 November 2018 | US 2020/0181491 A1<br>entire text, all drawings<br>CN 110662807 A | |
| WO 2016/194667 A1 | 08 December 2016 | US 2018/0149927 A1<br>entire text, all drawings<br>CN 107615144 A | |
| US 2015/0307781 A1 | 29 October 2015 | TW 201540746 A<br>CN 105038818 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H9316200 A
- JP H10104633 A
- JP H876128 A
- JP H9138414 A
- JP H1138415 A
- WO 2016194667 A
- WO 2016194668 A
- WO 2018117239 A
- JP H10338880 A
- WO 2017170483 A
- WO 2011132751 A
- JP 2007286597 A
- WO 2011155577 A
- JP 2014224978 A
- WO 2015141598 A
- WO 2015072554 A
- JP 2016118753 A
- JP 2016200798 A
- WO 2010074269 A
- WO 2015060357 A
- WO 2011129414 A
- WO 2021171939 A
- JP 2022023238 A